# EUROPEAN PATENT SPECIFICATION

(11) **EP 2 917 002 B1**
(45) Date of publication and mention of the grant of the patent: **27.09.2017**
(21) Application number: 13854112.3
(22) Date of filing: 08.11.2013
(51) Int. Cl.: B25J 9/00, B25J 9/10, B25J 15/00, B25J 15/04, B25J 15/10

(54) **COMPLIANT UNDERACTUATED GRASPER**
NACHGIEBIGE UNTERBETÄTIGTE ZANGE
DISPOSITIF DE SAISIE SOUS-ACTIONNÉ SOUPLE

(30) Priority: 09.11.2012 US 201261724506 P; 09.11.2012 US 201261724512 P; 09.11.2012 US 201261724517 P; 15.03.2013 US 201313833580; 15.03.2013 US 201313833687; 15.03.2013 US 201313833631
(43) Date of publication of application: 16.09.2015
(73) Proprietor: iRobot Corporation, Bedford, MA 01730 (US)
(72) Inventor: CLAFFEE, Mark, Methuen, Massachusetts 01844 (US); CORSON, Nicholas Roy, Hollis, New Hampshire 03049 (US)
(74) Representative: HGF Limited
(86) International application number: PCT/US2013/069182
(87) International publication number: WO 2014/074840

(56) References cited:
- JP-A- 2001 277 174
- JP-A- 2010 036 328
- KR-A- 20110 005 146
- US-A1- 2007 018 470
- US-A1- 2009 302 626
- US-A1- 2009 317 223
- US-A1- 2012 205 933
- RAYMOND R MA ET AL: "Dexterous manipulation with underactuated fingers: Flip-and-pinch task", ROBOTICS AND AUTOMATION (ICRA), 2012 IEEE INTERNATIONAL CONFERENCE ON, IEEE, 14 May 2012 (2012-05-14), pages 3551-3552, XP032451079, DOI: 10.1109/ICRA.2012.6225348 ISBN: 978-1-4673-1403-9
- A.M. DOLLAR ET AL: "A robust compliant grasper via shape deposition manufacturing", IEEE / ASME TRANSACTIONS ON MECHATRONICS., vol. 11, no. 2, 1 April 2006 (2006-04-01), pages 154-161, XP055291952, US ISSN: 1083-4435, DOI: 10.1109/TMECH.2006.871090

## Description

### BACKGROUND OF THE INVENTION

End effectors or graspers are commonly mounted on a robotic arm and used to manipulate and/or grasp objects in a selected environment. The environment may be structured or unstructured.

US 2009/302626 discloses a mechanical grasping system including a multi-fingered hand driven by a single actuator.

US 2007/018470 discloses a robot hand comprising at least one finger link configured to comprise a first member, a second member adhered to a surface of the first member and a third member covering at least the second member.

Raymond R Ma et al discloses a method by which an underactuated hand flips thin objects off the table into a stable punch grasp.

### SUMMARY OF THE INVENTION

According to embodiments of the present invention, a compliant underactuated grasper includes a base and a plurality of fingers. At least one of the plurality of fingers includes: a proximal phalanx; a proximal joint connecting the proximal phalanx to the base; a distal phalanx; a distal joint connecting the distal phalanx to the proximal phalanx; and a member for moving the phalanges. At least one of the proximal joint and the distal joint includes a flexure joint, the flexure joint having a first compliance in a first direction of the flexure joint and a second compliance in a second direction of the flexure joint, wherein the second compliance is stiffer than the first compliance. The distal phalanx includes: a rounded end face; and a lifting portion including a lifting edge adjacent the rounded end face. The member acts in parallel to the first direction of the flexure joint. The grasper further includes at least one actuator associated with the member. The grasper has fewer actuators than degrees of freedom.

In some embodiments, the lifting edge is a free terminal edge, and the distal phalanx includes a lifting groove defined between the rounded end face and the lifting edge. According to some embodiments, the rounded end face defines an arc in a plane substantially perpendicular to a longitudinal axis of the lifting groove. In some embodiments, the lifting groove has a depth in the range of from about 1 mm to 3 mm.

The rounded end face may be formed of a softer material than the lifting portion. In some embodiments, the softer material of the rounded end face has a hardness in the range of from about 0 Shore A to 60 Shore A, and the lifting portion has a hardness of at least about 100 GPa.

The grasper includes an adjustment mechanism operable to selectively adjust the position of the lifting edge relative to the rounded end face.

In some embodiments, the distal phalanx has a substantially planar inner grasping face and distinct, opposed, axially extending inner side edges.

According to embodiments of the present invention, a compliant underactuated grasper includes a base and a plurality of fingers. At least one of the plurality of fingers includes: a proximal phalanx; a proximal joint connecting the proximal phalanx to the base; a distal phalanx; a distal joint connecting the distal phalanx to the proximal phalanx; and a member for moving the phalanges. At least one of the proximal joint and the distal joint includes a flexure joint, the flexure joint having a first compliance in a first direction of the flexure joint and a second compliance in a second direction of the flexure joint, wherein the second compliance is stiffer than the first compliance. The member acts in parallel to the first direction of the flexure joint. The grasper further includes at least one actuator associated with the member. The distal phalanx has a substantially planar inner grasping face and distinct, opposed, axially extending inner side edges. The grasper has fewer actuators than degrees of freedom.

In some embodiments, the planar inner grasping face is substantially parallel to a primary bending axis of the flexure joint.

The planar inner grasping face may be formed of an elastomeric material.

In some embodiments, the flexure joint includes a flexure link formed of an elastomeric material.

In some embodiments, the distal phalanx is substantially rectangular in cross-section perpendicular to the first direction.

According to embodiments of the present invention, a compliant underactuated grasper includes a base, two finger digits and a thumb digit opposing the two finger digits. The finger digits and the thumb digit each include: a proximal phalanx; a distal phalanx; a distal joint directly connecting the proximal phalanx to the distal phalanx, the distal joint being compliant in a first direction; a proximal joint directly connecting the proximal phalanx to the base, the proximal joint being compliant in a second direction; and a tendon cable for moving the proximal and distal phalanges, wherein the tendon cable is substantially parallel to the first direction of compliance and substantially changes the compliance of the distal joint in the first direction. The grasper further includes at least one actuator to move the finger digits and thumb digit. Each distal phalanx has a length that is 0.60 to 0.66 times the length of the proximal phalanx connected thereto. An average distance from the proximal joint of each of the two finger digits to the thumb is 1.30 to 1.44 times the average length of the proximal phalanges of the two finger digits. The grasper has fewer actuators than degrees of freedom.

In some embodiments, the base includes a palm between the finger digits and the thumb digit, and the palm has a major dimension that is in the range of from about 1.21 to 1.33 times the average length of the proximal phalanges.

In some embodiments, a spacing between the proximal joints of the finger digits is in the range of from about 0.97 to 1.08 times the average length of the proximal phalanges.

According to embodiments of the present invention, a compliant underactuated grasper includes a palm base and two fingers. Each of the fingers comprises: a proximal phalanx; a distal phalanx; a compliant flexure joint connecting the distal phalanx to the proximal phalanx; and a pin joint connecting the proximal phalanx to the palm base, the pin joint constraining angular movement of the proximal phalanx relative to the palm base to rotation about a pin pivot axis. The grasper further includes at least one actuator to move the fingers. The grasper has fewer actuators than degrees of freedom.

The grasper may further include a pin joint angle sensor associated with each finger.

The grasper may further include a rotation joint connecting each finger to the palm base, wherein the finger can be rotated relative to the palm base about the rotation joint to reorient its pin pivot axis with respect to the palm base.

In some embodiments, the grasper further includes a thumb and at least one actuator to move the thumb independently of the fingers. The thumb includes: a proximal phalanx; a distal phalanx; a compliant flexure joint connecting the distal phalanx to the proximal phalanx; and a pin joint connecting the proximal phalanx to the palm base, the pin joint constraining angular movement of the proximal phalanx relative to the palm base to rotation about a pin pivot axis.

According to embodiments of the present invention, a compliant underactuated grasper includes a palm base and two fingers. Each of the fingers includes: a proximal phalanx; a distal phalanx; a compliant flexure joint connecting the distal phalanx to the proximal phalanx; a pin joint connecting the proximal phalanx to the palm base, the pin joint having a dominant degree of freedom about a pin pivot axis; and a tendon cable for moving the proximal and distal phalanges such that movement of the tendon cable generates angular motion of the proximal phalanx about the pin pivot axis at a greater rate than angular motion of the distal phalanx about the flexure joint. The grasper further includes at least one actuator to move the fingers. The grasper has fewer actuators than degrees of freedom.

In some embodiments, the flexure joint includes a flexure link formed of a compliant elastomeric material.

According to some embodiments, the pivot joint connects the proximal phalanx to the palm base for rotation about the pivot joint in a first direction and a second direction, the grasper includes a return biasing spring to drive the proximal phalanx in the second direction to a return position, the return biasing spring has a first spring rate, the flexure joint is configured to bias the distal phalanx into an open position relative to the proximal phalanx and has a second spring rate, and the second spring rate is greater than the first spring rate. In some embodiments, the second spring rate is at least eight times the first spring rate. In some embodiments, the first spring rate is sufficient to retain the proximal phalanx in the return position in any orientation of the grasper with the tendon cable slack, and the second spring rate is sufficient to retain the distal phalanx in the open position in any orientation of the grasper with the tendon cable slack.

According to embodiments of the present invention, a compliant underactuated grasper includes a palm base and two fingers. Each of the fingers includes: a proximal phalanx; a distal phalanx; a compliant flexure joint connecting the distal phalanx to the proximal phalanx; a pivot joint connecting the proximal phalanx to the palm base for rotation about the pivot joint in a first direction and a second direction; a tendon cable for moving the proximal phalanx in the first direction; a return biasing spring to drive the proximal phalanx in the second direction to a return position, wherein the spring rate of the return biasing spring is sufficient to retain the proximal phalanx in the return position in any orientation of the grasper with the tendon cable slack. The grasper further includes at least one actuator associated with each tendon cable. The grasper has fewer actuators than degrees of freedom.

In some embodiments, the return biasing spring includes a torsion spring.

According to embodiments of the present invention, a grasper includes a base, a finger, a tendon cable and a magnetic breakaway mechanism. The finger has a proximal end connected to the base by a proximal joint. The tendon cable is configured to move the finger relative to the base. The magnetic breakaway mechanism releasably couples the finger to the base.

In some embodiments, the tendon cable extends through the magnetic breakaway mechanism and to the finger. The magnetic breakaway mechanism may include: a finger submount, wherein the finger is pivotably connected to the finger submount by the proximal joint; and a base submount on the base; wherein the finger submount and the base submount are magnetically attracted to one another and the finger submount is connected to the base via the base submount. According to some embodiments, the magnetic breakaway mechanism includes at least one locator feature to re-align the finger submount with the base submount when the finger submount and the base submount are separated and re-joined. The at least one locator feature may include an annular or semi-annular groove.

In some embodiments, the magnetic breakaway mechanism is operative to release the finger to deflect relative to the base when a load exceeding a threshold load is applied to the finger.

According to embodiments of the present invention, a compliant underactuated grasper includes a base, two finger digits and a thumb digit opposing the two finger digits. The finger digits and the thumb digit each comprise: a proximal phalanx; a distal phalanx; a distal joint directly connecting the proximal phalanx to the distal phalanx, the distal joint being compliant in a first direction; a proximal joint directly connecting the proximal phalanx to the base, the proximal joint being compliant in a second direction; and a tendon cable for moving the proximal and distal phalanges, wherein the tendon cable is substantially parallel to the first direction of compliance and substantially changes the compliance of the distal joint in the first direction. The grasper further includes at least one actuator to move the finger digits and thumb digit. The thumb digit further includes a second tendon cable for selectively restraining the proximal phalanx thereof in opposition to the first tendon cable to enable movement of the distal phalanx independently of the proximal phalanx. The grasper has fewer actuators than degrees of freedom.

In some embodiments, the grasper includes a first actuator to actuate the first tendon cable of the thumb digit and a second actuator to actuate the second tendon cable of the thumb digit.

According to some embodiments, each finger digit does not include a tendon for selectively restraining the proximal phalanx thereof in opposition to the tendon cable thereof to enable movement of the distal phalanx independently of the proximal phalanx.

According to embodiments of the present invention, a compliant underactuated grasper includes a base, two finger digits and a thumb digit opposing the two finger digits. The finger digits and the thumb digit each comprise: a proximal phalanx; a distal phalanx; a distal joint directly connecting the proximal phalanx to the distal phalanx, the distal joint being compliant in a first direction; a proximal joint directly connecting the proximal phalanx to the base, the proximal joint being compliant in a second direction; and a tendon cable for moving the proximal and distal phalanges, wherein the tendon cable is substantially parallel to the first direction of compliance and substantially changes the compliance of the distal joint in the first direction. The grasper further includes at least one actuator to move the finger digits and thumb digit. The tendon cable is capable of transmitting sustained tensile loads in the range of from about 60 to 120 1bf, exhibits low energy storage upon bending, and is robust to bend radii less than one millimeter. The grasper has fewer actuators than degrees of freedom.

In some embodiments, at least one of the finger digits and the thumb digit includes a magnetic breakaway mechanism releasably coupling the proximal joint to the base.

Further features, advantages and details of the present invention will be appreciated by those of ordinary skill in the art from a reading of the figures and the detailed description of the embodiments that follow, such description being merely illustrative of the present invention.

### BRIEF DESCRIPTION OF THE DRAWINGS

**Figure 1** is a fragmentary, perspective view of a robot including a grasper according to embodiments of the invention.
**Figure 2** is a front perspective view of the grasper of **Figure 1****.**

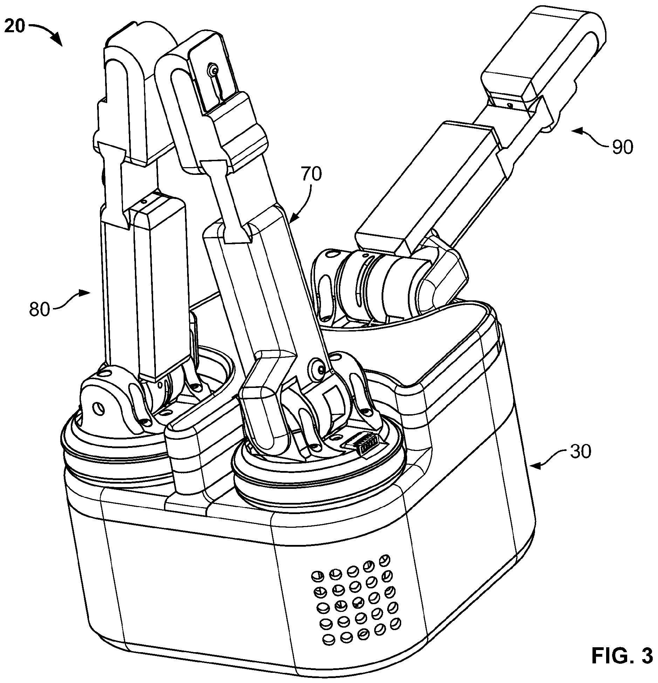

**Figure 3** is a rear perspective view of the grasper of **Figure 1****.**
**Figure 4** is a cross-sectional view of the grasper of **Figure 1** taken along the line **4-4** of **Figure 1****.**
**Figure 5** is a cross-sectional view of the grasper of **Figure 1** taken along the line **5-5** of **Figure 1****.**
**Figure 6** is a top plan view of the grasper of **Figure 1****.**
**Figure 7** is a side elevational view of the grasper of **Figure 1****.**
**Figure 8** is a rear elevational view of the grasper of **Figure 1****.**
**Figure 9** is a top perspective view of a finger forming a part of the grasper of **Figure 1****.**
**Figure 10** is a bottom perspective view of the finger of **Figure 9****.**
**Figure 11** is a cross-sectional view of the finger of **Figure 9** taken along the line **11-11** of **Figure 9****.**
**Figure 12** is an enlarged, fragmentary, side view of the finger of **Figure 9****.**
**Figure 13** is a top plan view of the finger of **Figure 9****.**
**Figure 14** is a side view of the finger of **Figure 9****.**
**Figure 15** is a top perspective view of the finger of **Figure 9** and an associated magnetic breakaway system.
**Figure 16** is an exploded, fragmentary, bottom perspective view of the finger and magnetic breakaway system of **Figure 15****.**
**Figure 17** is an exploded, fragmentary, top perspective view of the finger and magnetic breakaway system of **Figure 15****.**
**Figure 18** is a cross-sectional view of the magnetic breakaway system of **Figure 15** taken along the line **18-18** of **Figure 15****.**
**Figure 19** is a cross-sectional view of the magnetic breakaway system of **Figure 15** taken along the line **19-19** of **Figure 15****.**
**Figure 20** is an exploded, fragmentary, cross-sectional, bottom perspective view of the magnetic breakaway system of **Figure 15****.**
**Figure 21** is a top perspective view of a base forming a part of the grasper of **Figure 1** including submounts forming a part of the magnetic breakaway system.
**Figure 22** is a fragmentary, perspective view of the finger and magnetic breakaway system of **Figure 15** illustrating operation of the magnetic breakaway system.
**Figures 23-29** illustrate various finger configurations that can be executed by the grasper of **Figure 1****.**
**Figures 30A** and **30B** illustrate a sequence of movements of the grasper of **Figure 1** to grab and pick up an object.

### DETAILED DESCRIPTION OF EMBODIMENTS OF THE INVENTION

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein the expression "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Embodiments of the present invention are directed to end effectors or graspers. A grasper as disclosed herein may form part of a robot or a prosthetic apparatus. In particular, the grasper may be mounted on a robotic arm and used to manipulate and grasp objects in a structured or unstructured environment. The grasper may be employed as a grasper or "hand" of a humanoid robot and/or may comply with the criteria specified under the DARPA Autonomous Robot Manipulation Hardware (ARM-H) program.

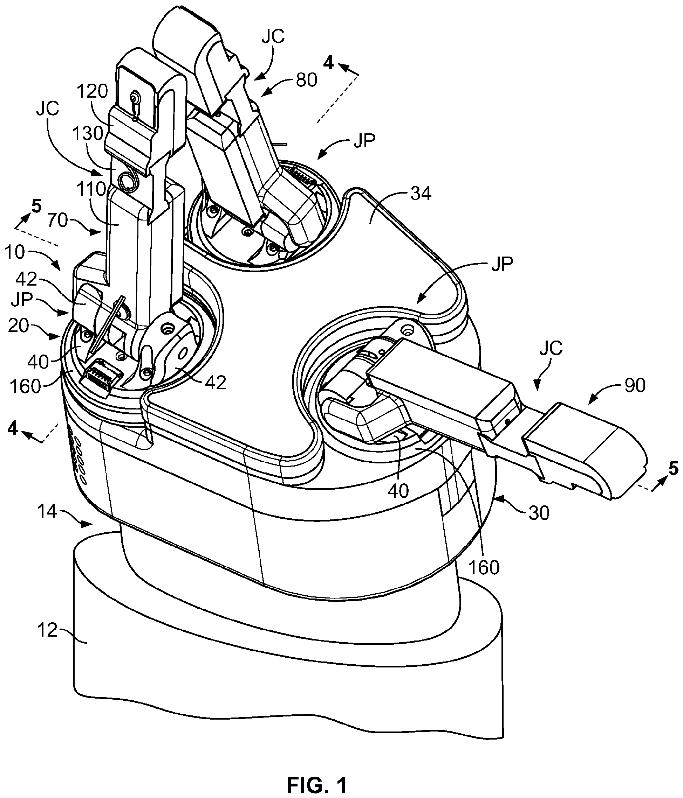

With reference to the figures, a robot **10 (****Figure 1****)** according to embodiments of the invention is shown therein and includes an arm **12** and a grasper **20** rotatably coupled to the arm **12** by a wrist joint **14.**

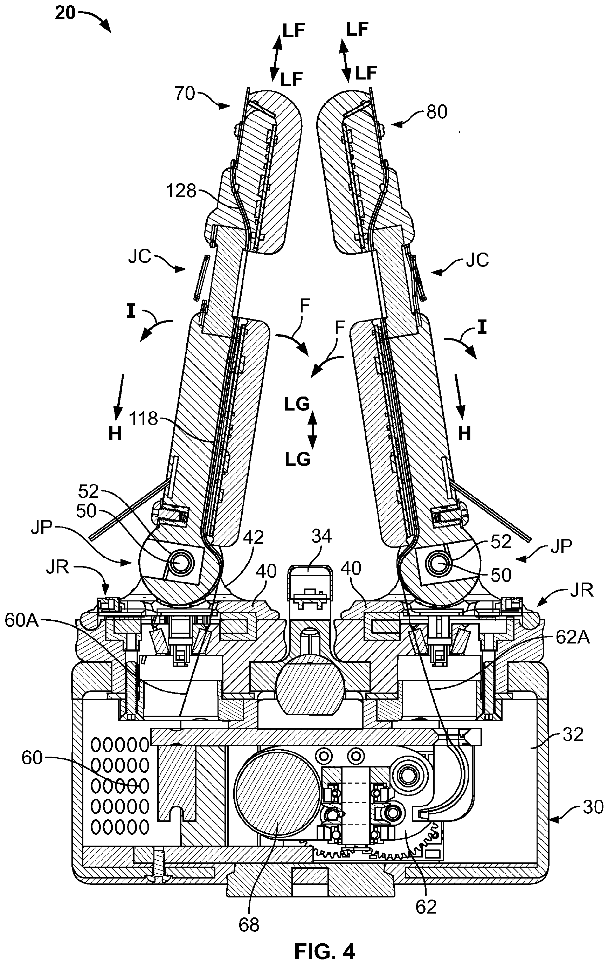

The grasper **20** includes a base assembly **30,** a first finger **70,** a second finger **80,** and a thumb **90.** The fingers **70, 80** and the thumb **90** may be identically constructed except for their placement on the base **30** and methods and mechanisms of actuation as discussed below. Except as otherwise noted, "finger" and "fingers" also refer to the thumb **90.** The grasper **20** has a primary or longitudinal axis **LG-LG (****Figure 4****).**

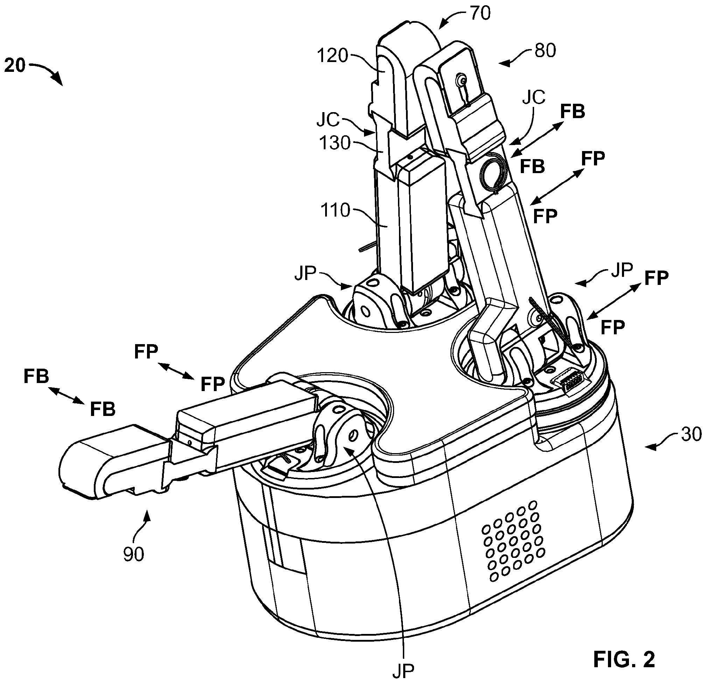

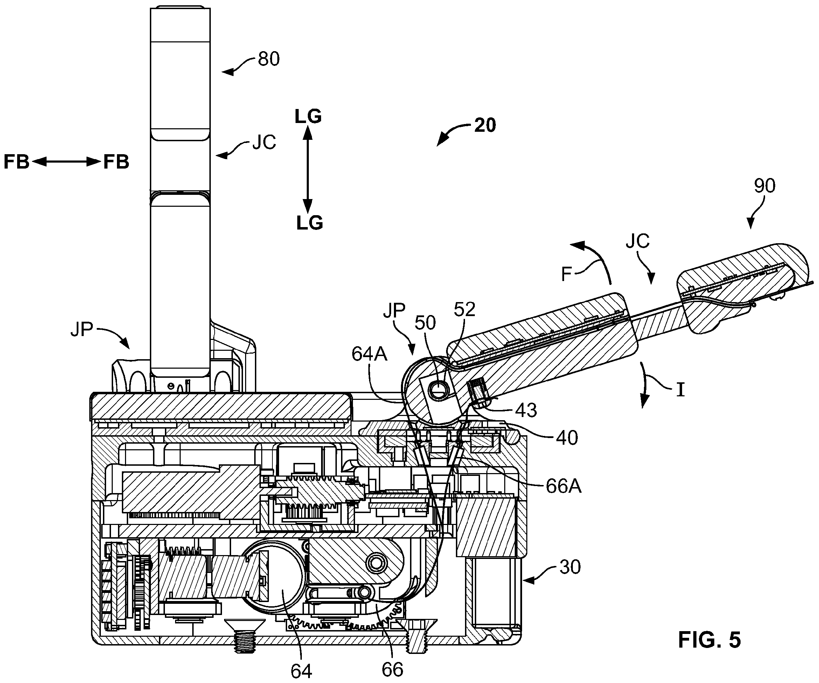

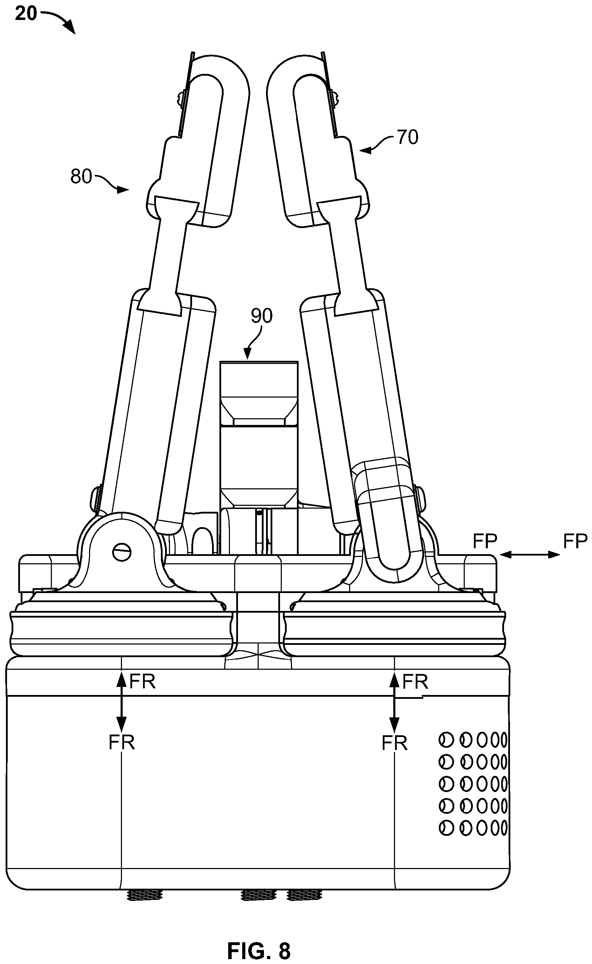

The base **30** includes a first finger actuator **60,** a second finger actuator **62,** a thumb agonist actuator **64,** a thumb antagonist actuator **66,** and a finger rotation actuator **68.** The actuators **60, 62, 64, 66, 68** may be electric motors (*e.g.,* DC motors). Tendon cables **60A** and **62A (****Figure 4****)** are connected to the fingers **70** and **80,** respectively, to cause controlled movement of the fingers **70** and **80** using the actuators **60** and **62.** Tendon cables **64A, 66A (****Figure 5****)** are connected to the thumb **90** to cause controlled movement of the thumb **90** using the actuators **64** and **66,** respectively. Each of the fingers **70, 80, 90** can be pivoted at a respective proximal pin pivot joint **JP** about an axis **FP-FP (****Figure 2****)** by the tendons **60A, 62A, 64A, 66A** and the actuators **60, 62, 64, 66.** Additionally, the fingers **70** and **80** can be rotated at respective rotation joints **JR** about rotation axes **FR-FR (****Figure 8****)** in opposed directions **K** by the actuator **68.** The fingers **70** and **80** are coupled by a linkage so that they rotate about the joints **JR** in tandem in opposite directions from each other. Each finger **70, 80, 90** can also be bent about a distal compliant flexure joint **JC (****Figure 1****)** as described below.

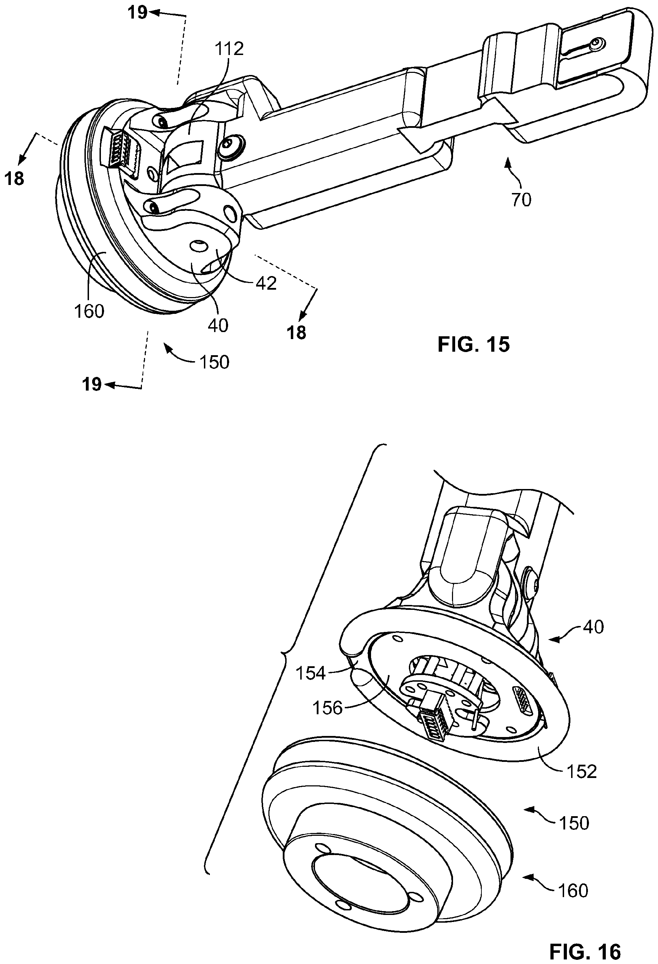

The base assembly **30** includes a frame **32** and a palm **34** on an operational side of the frame **32.** Three magnet base submounts **160** are mounted in the frame **32** and three associated finger base submounts **40** are mounted thereon **(****Figure 15****).** During normal operation, each submount **160** and its associated submount **40** are coupled to function effectively as a single unit. The submounts **160** of the fingers **70** and **80** are rotatable at the joints **JR.**

The fingers **70, 80, 90** may be identically or similarly constructed as discussed above. An exemplary finger **70** will be described, and it will be appreciated that this description will likewise apply to the other fingers **80** and **90.**

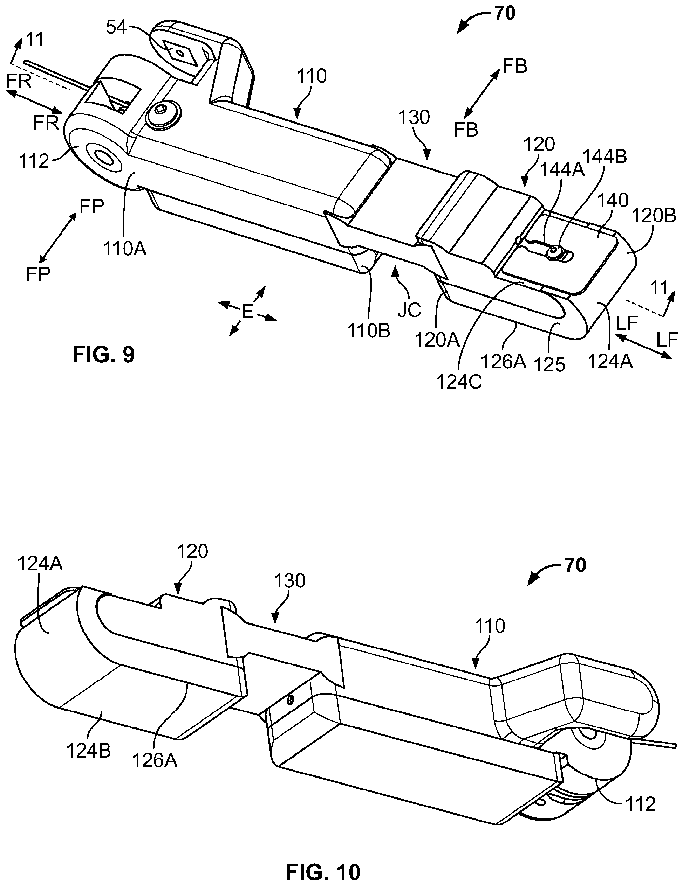

With reference to **Figures 9-14****,** the finger **70** includes a proximal phalanx **110** and a distal phalanx **120** coupled by a compliant flexure link **130** at a compliant distal inter-phalanges flexure joint **JC.** The finger **70** also has a hinge feature **112** coupling the finger **70** to its finger base mount **40.** The finger **70** has a longitudinal axis **LF-LF.** More particularly, the proximal phalanx **110** has a proximal end **110A** and a distal end **110B.** The distal phalanx **120** has a proximal end **120A** and a distal end **120B.** The hinge feature **112** is provided on the end **110A.** The flexure link **130** is secured to the ends **110B** and **120A.** The end **120B** is free. A distal extension or plate member **140** is mounted on the end **120B.**

The hinge feature **112** is pivotally coupled to a cooperating hinge feature **42 (****Figure 1****)** on the finger base submount **40** by a pivot pin **50,** which defines the pin pivot axis **FP-FP,** to form the proximal pin pivot joint **JP.** Rotational movement of the finger **70** about the pivot joint **JP** is constrained to pivoting about the pivot axis **FP-FP** in a finger closing pivot direction **F** and a finger opening pivot direction **H.** The finger **70** defines a finger lateral plane E parallel to each of the longitudinal axis **LF-LF** and the pivot axis **FP-FP.** It will be appreciated that the orientation of the pivot axis **FP-FP** will vary depending on the rotational position of the submount **40** about the axis **FR-FR.**

In one embodiment, an angle position sensor **54** disposed in the joint **JP** detects the angular position of the phalanx **110** with respect to the base **30.** For example, a magnetic encoder may be mounted on one part of the joint **JP** (*e.g.,* the hinge feature **43)** and a cooperating magnet may be mounted on another part of the joint **JP** (*e.g.,* the hinge feature **112).**

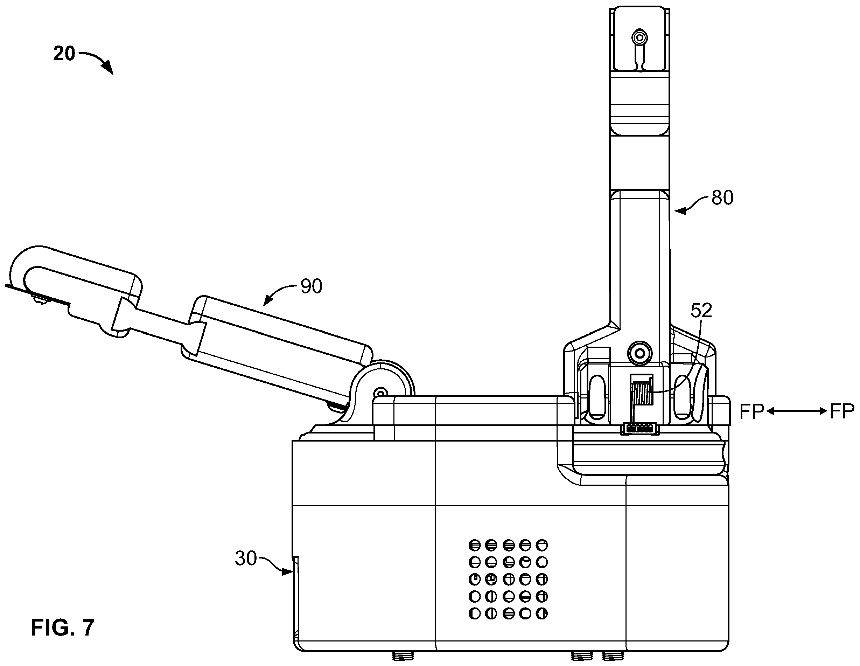

A biasing member **52 (****Figures 4** and **7****)** is provided in the joint **JP.** According to some embodiments, the biasing member **52** is a torsion spring and, in particular, may be a helical torsion spring. The torsion spring **52** serves as a counter spring or bias return spring. In the absence of restraint from a tendon cable or external force, the torsion spring **52** will force the finger **70** to pivot in a direction **I** to a wide-open position.

The flexure link **130** is semi-rigid, flexible, resilient and compliant. In some embodiments, the flexure link **130** is formed of an elastomeric material. The flexure link **130** flexes or bends preferentially about a distal or flexure joint pivot axis **FB-FB** in each of an inward, primary direction **M** and an outward direction **N.** The flexure link **130** can also flex or bend in opposed sideward or lateral, secondary directions **P** perpendicular to or transverse to the finger closing direction **F.** Thus, the flexure link **130** and the joint **JC** have a first compliance in a first direction **M** and a second compliance in a second direction **P.** The second direction **P** is perpendicular or transverse to the tendon cable retraction direction **H.** The first compliance is greater than the second compliance (*i.e.,* less force is required to deflect the flexure link **130** in the first direction). When relaxed and nonloaded, the flexure link **130** will elastically return to a relaxed position or state as shown in **Figures 9-11****.** According to some embodiments, the proximal phalanx **110** and the distal phalanx **120** are substantially parallel or co-axial when the flexure link **130** is in its return position.

The tendon cable **60A** is routed from the actuator **60,** through tendon raceways **158**,**168** in the submounts **40**,**160**, along the inner side of the hinge feature **112,** through a tendon raceway **118** in the proximal phalanx **110,** across the flexure joint **JC,** and through a raceway **128** in the distal phalanx **120,** and is anchored to the distal phalanx **120** (*e.g.,* in the raceway **128).** The actuator **60** can draw the tendon cable **60A** through the raceways **118, 158, 168** in a direction **H** to pivot the finger **70** in the closing direction **F.** The actuator **60** can then release or pay out the tendon cable **60A** in the opposite direction to permit the finger **70** to pivot in the opening direction **I** under the torque of the torsion spring **52.**

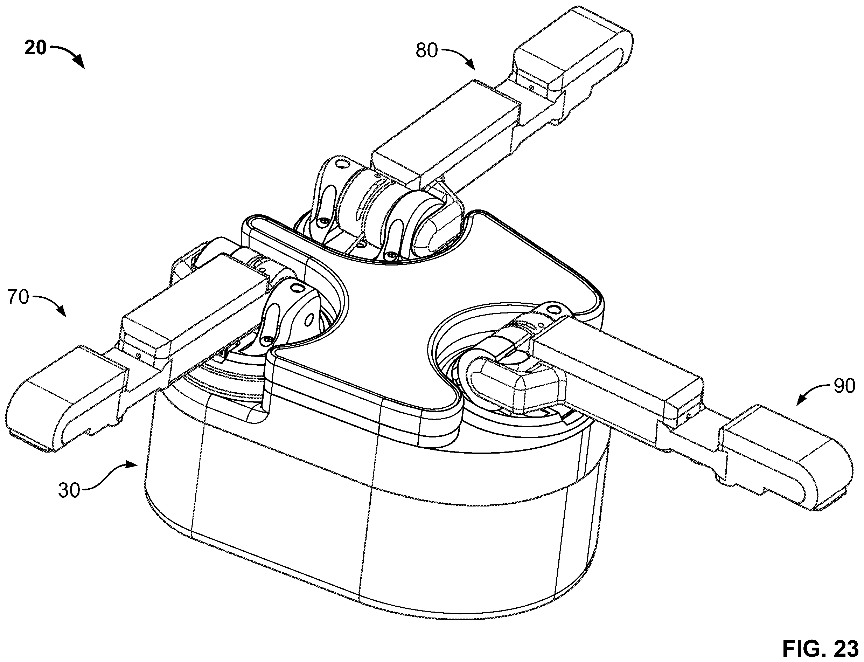

Operation of the finger **70** (and corresponding operation of the finger **80** and the thumb **90)** will now be discussed in further detail. With the finger **70** in the fully open position **(****Figure 23****),** the actuator **60** draws the tendon cable **60A.** The spring force or resistance from the torsion spring **52** is less than the stiffness or spring force or bend resistance of the flexure link **130.** Therefore, assuming the proximal phalanx **110** does not encounter external resistance, as the tendon cable **60A** applies tension load to the finger **70,** the finger **70** will be displaced primarily about the pin pivot **JP** and secondarily about the flexure joint **JC.** That is, the proximal phalanx **110** will pivotally rotate a greater angular distance about the pivot pin axis **FP-FP** than the distal phalanx **120** pivotally rotates or bends about the flexure joint axis **FB-FB.**

If and when the proximal phalanx **110** is impeded by an external object (*e.g.,* an object grasped) or strikes a limit (*e*.*g*., bottoms out on the base **30),** a greater portion or all of the tension load of the tendon cable **60A** will be applied to the flexure joint **JC,** and the distal phalanx **120** will then bend or rotate about the flexure joint axis **FB-FB** at a greater rate than the rate at which the proximal phalanx **110** rotates about the pin pivot axis **FP-FP.**

The differential rate of displacement of the phalanges **110** and **120** about their respective pivot axes will depend on the relative effective spring forces of the torsion spring 52 and the flexure link **130.** According to some embodiments, the spring force of the flexure joint **JC** is at least 8 times the spring force of the pin pivot joint **JP** and, in some embodiments, is in the range of from about 8 to 12 times the spring force of the pin pivot joint **JP.** In some embodiments the spring rate of the torsion spring **52** is great enough to fully counteract the force of gravity on the finger **70** in any intended orientation when the grasper **20** is static and not acted on by an external object. According to some embodiments, the spring force of the torsion spring **52** is between about 100 and 150 percent of the minimum force necessary to fully counteract the force of gravity on the finger **70** in any intended orientation when the grasper **20** is static and not acted on by an external object. By minimizing the torsion spring force, the designer can reduce the required spring rate of the flexure joint **JC.** In turn, the return forces that the actuator **60** must overcome are reduced.

Notably, the spring force of the flexure joint **JC** can be as high as desired and/or needed. In particular, the spring force of the flexure joint **JC** may be increased as the grasper is scaled up in size and used to lift larger and heavier objects.

**Figures 1** and **23****-29** show various configurations of the fingers **70, 80, 90** that can be assumed or executed by the grasper **20.**

**Figure 23** shows a wide open or ready position, wherein the tendon cables **60A, 62A, 64A** are slack, permitting the torsion springs **52** to force each finger **70, 80, 90** to its limit in its open direction.

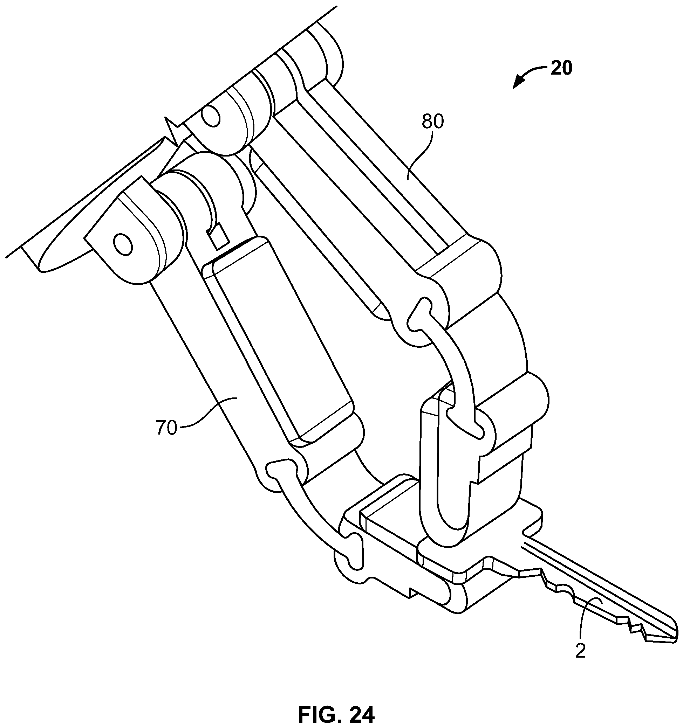

**Figure 1** shows the fingers **70, 80** in a pinch configuration, which can be achieved when the actuators **60, 62** pull the fingers **70, 80** (via the tendon cables **60A, 62A)** closed without significant resistance. For this maneuver, the finger rotation actuator **68** may first be used to rotate the fingers **70, 80** into opposition with one another with their pivot axes **FP-FP** substantially parallel. **Figure 24** illustrates a modified pinch configuration being used to hold and/or manipulate an object **2** such as a flat key.

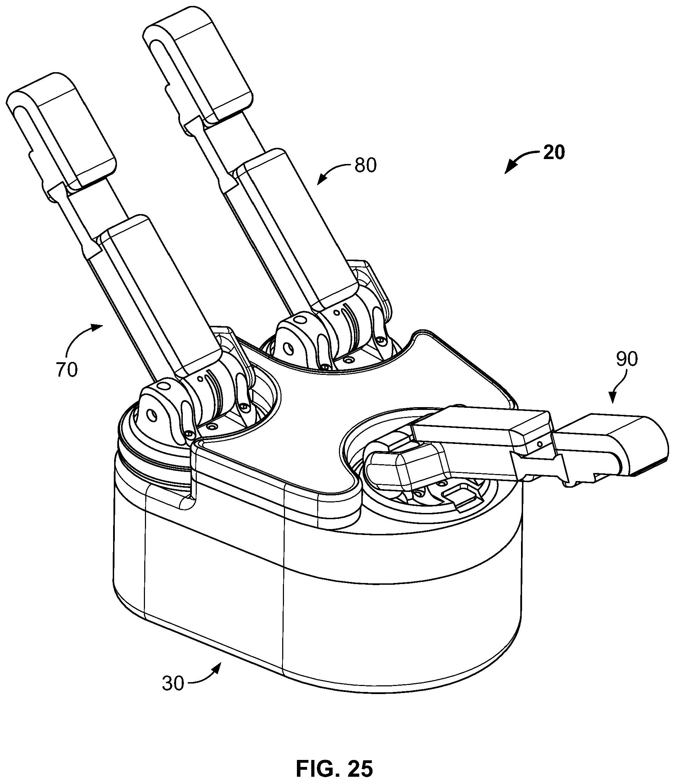

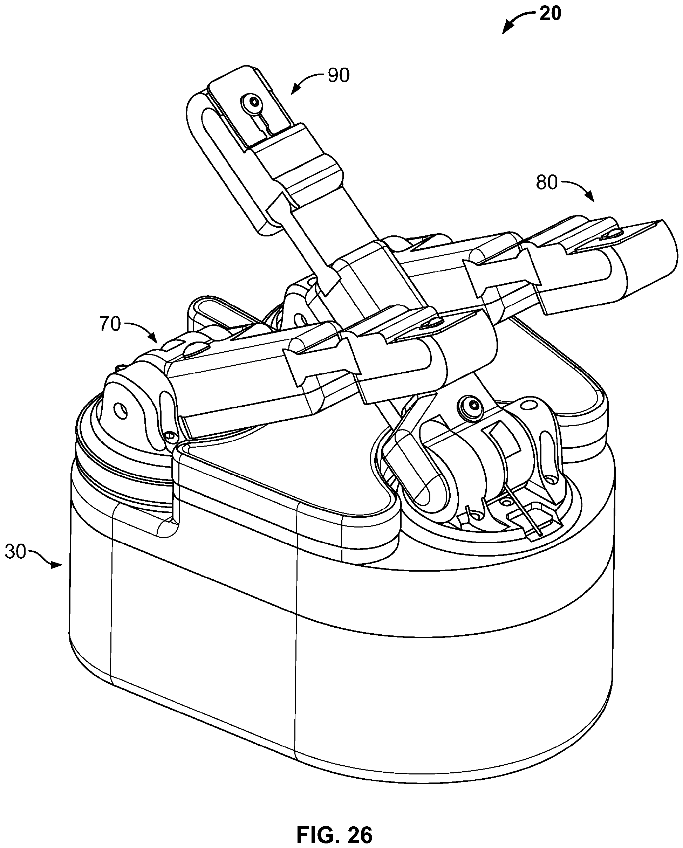

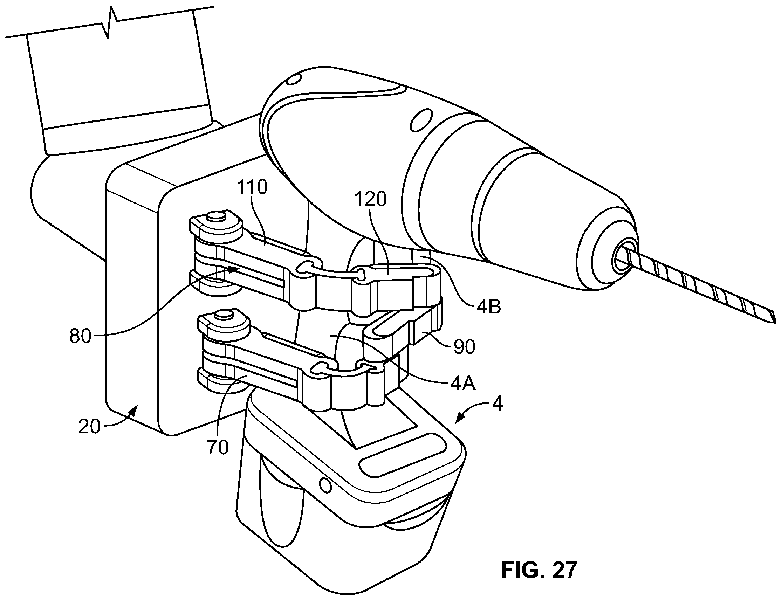

**Figures 23****,** **25** and **26** show the fingers **70, 80, 90** progressing from the wide open configuration **(****Figure 23****)** to a power grasp configuration **(****Figure 26****)** wherein the thumb **90** crosses the fingers **70, 80.** For this maneuver, the rotation actuator **68** may be used to rotate the fingers **70, 80** into opposition with the thumb **90** with the pivot axes **FP-FP** of the fingers **70, 80, 90** substantially parallel as shown in **Figure 25****.** **Figure 27** illustrates a modified power grasp configuration being used to hold and/or manipulate an object **4** such as a power tool. The exemplary power tool **4** has a handle **4A** and a trigger **4B.** The grasper **20** securely holds the handle **4A** using the fingers **70, 80, 90,** and can also be used to operate the trigger **4B** by applying and releasing tension to/from the finger **80** via the tendon cable **62A** so that its distal phalanx **120** will independently bend at the flexure joint **JC** and press and release the trigger **4B** (the proximal phalanx **110** being limited or constrained by the handle **4A).**

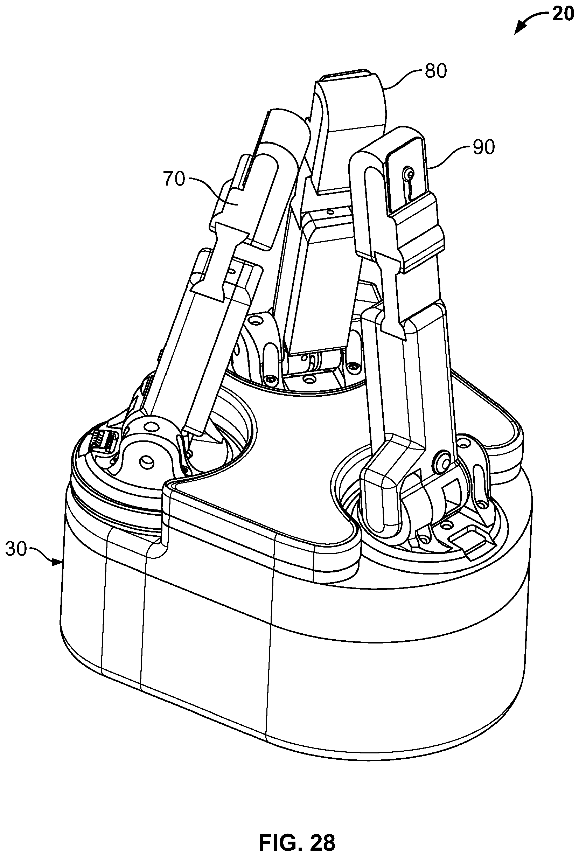

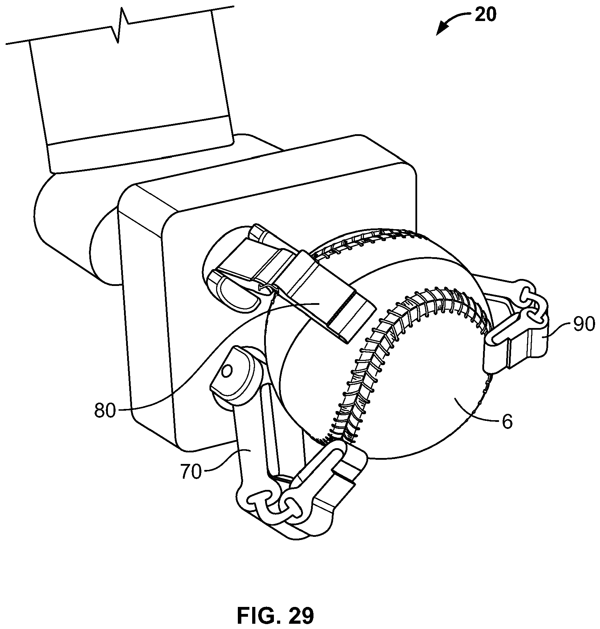

**Figure 28** shows the fingers **70, 80, 90** in a spherical grasp position. For this maneuver, the fingers **70, 80** are rotated so that their pivot axes **FP-FP** extend at an oblique angle to the pivot axis **FP-FP** of the thumb **90.** **Figure 29** illustrates a modified spherical grasp position wherein the grasper **20** is holding an object **6** such as a ball.

It will be appreciated that the foregoing are not exhaustive of the configurations and manipulations that can be achieved using the grasper **20.**

The relationships between the lengths of the phalanges **110** and **120** and the finger and thumb base positions can provide advantageous performance. In some embodiments, these relationships are scalable.

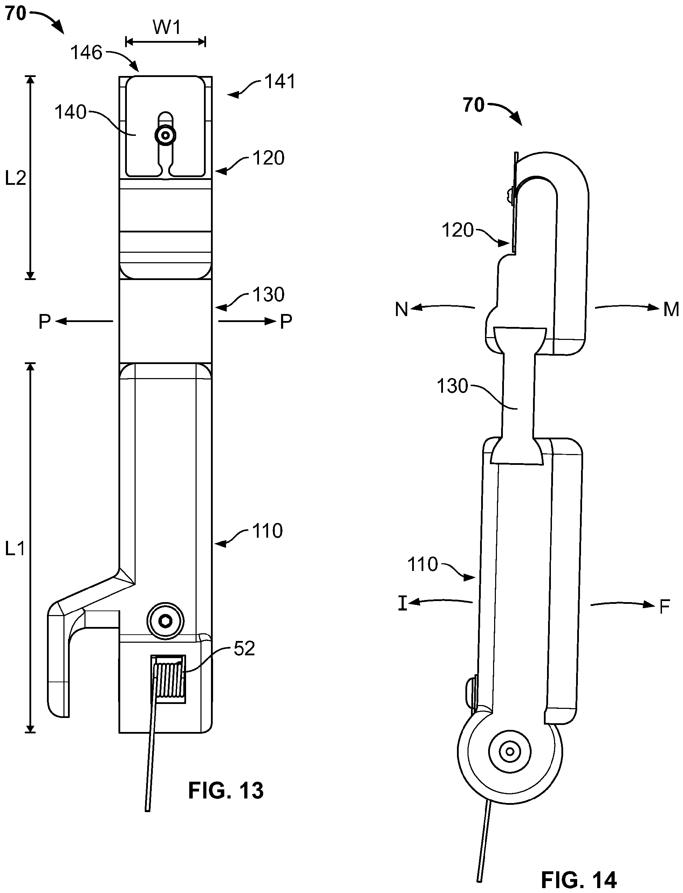

According to some embodiments, the length **L1 (****Figure 13****)** of the proximal phalanx **110** of each finger **70, 80** is greater than the length **L2** of the distal phalanx **120** of the same finger. According to some embodiments, the length **L1** is in the range of from about 0.60 to 0.66 times the length **L2.**

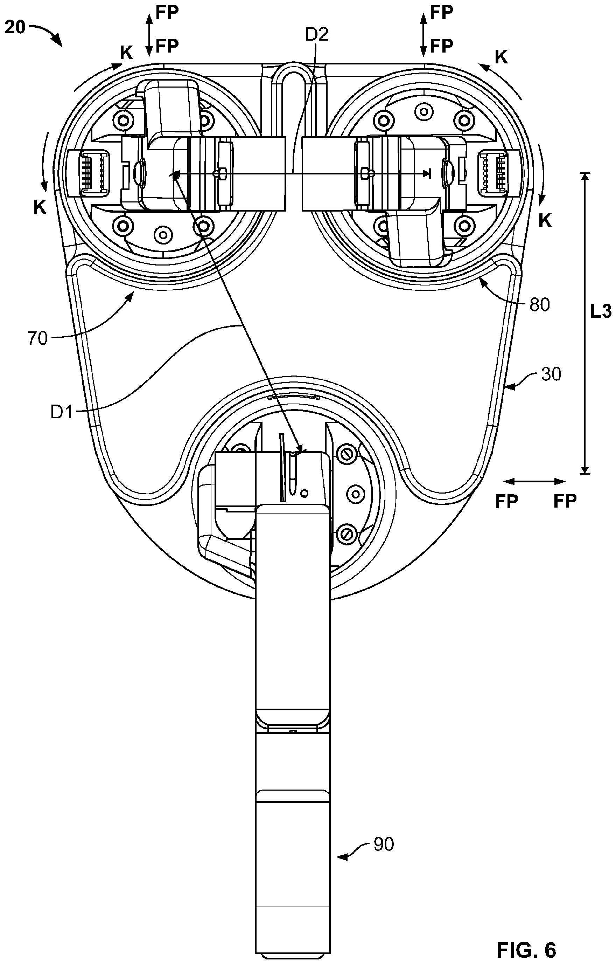

In some embodiments, the average distance **D1 (****Figure 6****)** from each finger **70, 80** base pivot joint **JP** to the thumb **90** pivot joint **JP** is in the range of from about 1.30 to 1.44 times the average proximal phalanx length **L1.**

According to some embodiments, the major dimension **L3 (****Figure 6****)** of the palm **34** is in the range of from about 1.21 to 1.33 times the average proximal phalanx length **L1**.

In some embodiments, the spacing **D2 (****Figure 6****)** between the pivot joints **JP** of the fingers **70, 80** is in the range of from about 0.97 to 1.08 times the average proximal phalanx length **L1.**

The provision of fingers each having a proximal pin pivot joint and a distal flexure joint as described may provide certain advantages. The rigid pivot at the base of the finger provides pinch stability and torsional strength to facilitate fine manipulation and heavy lifting. The flexure joint at the distal joint provides robustness for abuse and enhances the ability of the finger to adapt or conform to unknown shaped objects. According to some embodiments and as shown, the pin pivot axis **FP-FP** of each finger is substantially parallel to the primary flexure axis **FB-FB** of the finger.

With reference to **Figures 9-12****,** according to some embodiments, the grasper **20** is provided with a fingernail system **141.** The fingernail system **141** includes a distal plate member **140** mounted on the distal phalanx **120** of each finger **70, 80, 90** adjacent the distal end face **124A** thereof. Only one of the fingers **70** will be described hereinbelow. However, it will be appreciated that this description applies likewise to the fingers **80** and **90.**

The distal plate member **140** includes a base portion **144** and a free terminal lifting edge **142A**. The base portion **144** has a slot **144A** and is adjustably secured to the back face **124C** of the phalanx **120** by a fastener **144B** such as a screw. The free edge **142A** is located adjacent the end face **124A.** In some cases, and as shown, the distal plate member **140** has an extension portion **142** terminating in the free edge **142A** and overhanging (cantilevered) or extending axially beyond the location **147** where the plate member 140 diverges from the phalanx **120** to form a ledge. However, in other embodiments, the free edge **142A** can be coincident with or inboard of the location **147.**

In some embodiments, the fastener **144B** and groove **144A** can serve as an adjustment mechanism. More particularly, the fastener **144B** can be loosened, the plate member **140** slid to position the edge **142A** as desired relative to the end face **124A,** and the fastener **144B** then re-tightened to secure the plate member **140** in place. It will be appreciated that other suitable adjustment mechanisms can be employed.

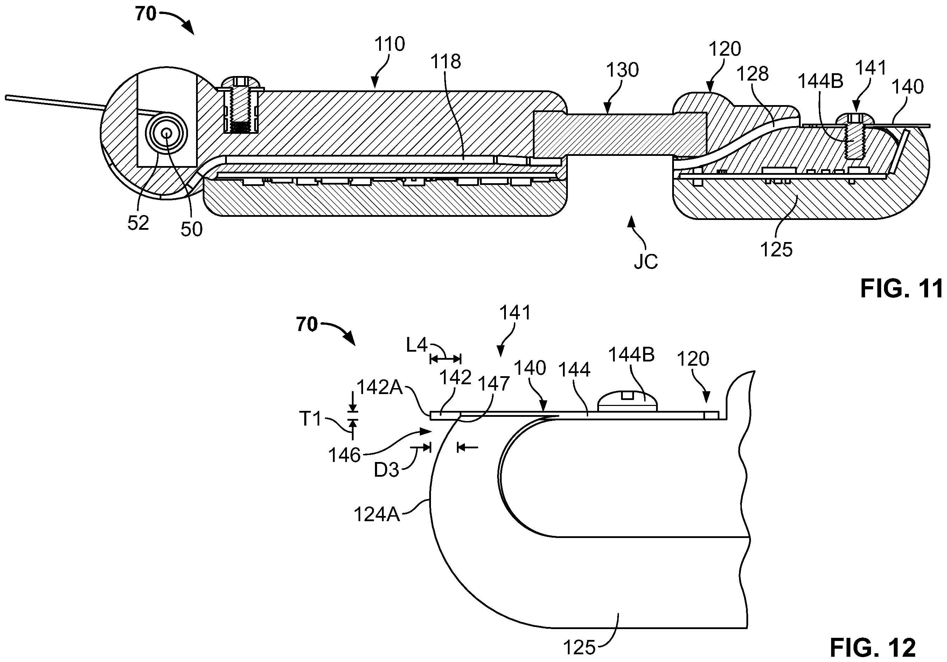

The plate member **142** is relatively thin, at least in the region of the free edge **142A.** According to some embodiments, the free edge **142A** has a thickness **T1 (****Figure 12****)** in the range of from about 0.02 inch to 0.03 inch. In some embodiments, the length L4 of the extension portion **142** from the location **147** to the free edge **142A** is at least 1 mm and, in some embodiments, from about 1.5 mm to 2.5 mm. According to some embodiments, the free edge **142A** is substantially parallel to the flexure joint axis **FB-FB.**

According to some embodiments and as shown, the end face **124A** and the plate member **140** are relatively configured and arranged to define a laterally extending slot, groove or undercut **146** between the underside of the extension section **142** and the opposing surface of the end face **124A.** In some embodiments and as shown, the end face **124A** is shaped to cut back axially to form the undercut **146.** In some embodiments, the end face **124A** is rounded or curvilinear and, in some embodiments, arcuate in cross-section (*i.e.,* in a plane perpendicular to the plane **E** and parallel to the longitudinal axis of the distal phalanx 120).

According to some embodiments, the depth **D3** of the undercut **146** is in the range of from about 1 mm to 3 mm. According to some embodiments, the width **W1** of the undercut **146** is in the range of from about 10 mm to 25 mm.

In some embodiments, the plate member **140** is rigid (*e*.*g*., formed of steel or stainless steel) and the end face **124A** is relatively soft or compliant (*e*.*g*., formed of a pliable rubber). As shown, the distal phalanx **120** includes a soft pad **125** including the end face **124A.** In some embodiments, the pad **125** has a durometer in the range of from about 0 Shore A to 60 Shore A and, in some embodiments, from about 10 Shore A to 40 Shore A, and the plate member **140** has a stiffness of at least about 100 GPa and, in some embodiments, at least 180 GPa.

The plate member **140** can be used to pick up, engage and/or manipulate objects in a manner not possible or that would be cumbersome without the "fingernail". The combination of the thin, rigid plate member **140** ("fingernail") and the pliable, soft pad **125** ("fingertip) enables the finger to capture an edge of an object therebetween (*i.e.,* in the undercut **146).** For example, if an object is disposed on a support surface (*e*.*g*., a table surface), the plate member **140** can be pressed against the support surface, then translated under the object (between the object and the support surface), and then used to lift the object. The compliant flexure joint **JC** compliments the functionality of the fingernail system **141.** The joint compliance enables the plate member **140** to adaptively align with and maintain contact with the support surface.

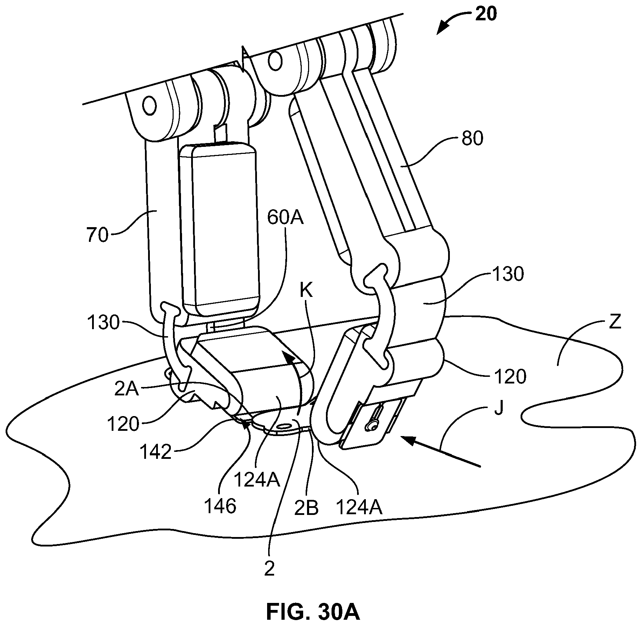

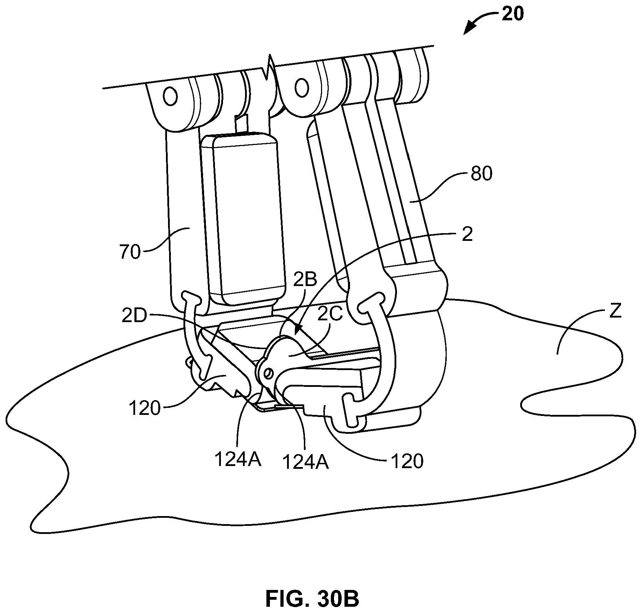

With reference to **Figures 30A** and **30B****,** the grasper **20** is shown therein performing a sequence of steps or movements to grasp and pick up an object **2** (as shown, a relatively flat key) from a planar surface **Z** (*e.g.,* a table or floor).

Initially, the key **2** is laid flat on the surface **Z.** With reference to **Figure 30A****,** the grasper **20** is positioned such that the extension section **142** of the plate member **140** of the finger **70** is placed on the surface **Z** proximate the side edge **2A** of the key **2** with the undercut **146** and the soft pad **125** overlying the extension section **142.** The phalanx **120** of the finger **80** is placed against the surface **Z** and driven in a direction **J** toward the key **2** and the finger **70,** the fingers **70** and **80** being relatively disposed in a pinching configuration. As the finger **80** is driven in the direction **J,** it engages the side edge **2B** of the key **2** and pushes the side edge **2A** onto the plate member **140** (in some embodiments, into the undercut **146** and between the extension section **142** and the soft pad **125).** The phalanx **120** of the finger **80** is further driven toward the finger **70** and upward to lift the side edge **2B** off the surface **Z.** The key **2** is thereby flipped or pivoted upwardly about its edge **2A** and toward the end face **124A** of the finger **70** in a direction **K** as shown in **Figure 30A****,** the edge **2A** being captured between the plate member **140** and the pad **125.** With reference to **Figure 30B****,** the finger **80** is used to continue lifting the key **2** and converged with the finger **70** until the key **2** is sandwiched between the end faces **124A** of the fingers **70** and **80,** which engage the opposed faces **2D** and **2C,** respectively, of the key **2.**

A relatively flat object such as a key (or credit card, etc.) can thus be grasped, removed from a planar surface and manipulated using the "fingernail" or fingernails" of the grasper **20** and cooperative movement of the fingers **70, 80** (and, in some embodiments, the base **30** and/or the arm **12).**

In some embodiments and as shown, the axially extending front side edges **126A** of the distal phalanx **120** are sharp or distinct and the front face **124B** (*i.e.,* the contact or engagement face) is substantially flat or planar **(****Figures 9** and **10****).** According to some embodiments, the side walls of the distal phalanx **120** forming the side edges **126A** with the front face **124B** are substantially planar at and adjacent the front face **124B** and, in some embodiments, extend substantially perpendicular to the plane of the front face **124B.** The front face **124B** may be textured. As shown, these edges **126A** and the front face **124B** can be the edges and front face of the soft pad **125.** In some embodiments, the plane of the front face **124B** is substantially parallel to the pivot pin axis **FP-FP** and the flexure joint primary axis **FB-FB.**

In use, the described configuration assists in stabilizing the distal phalanges **120.** For example, when the fingers **70, 80** are used to pinch an object between the distal phalanges **120,** the sharp side edges **126A** and the planar front face **124B** can reduce or eliminate the tendency of the distal phalanges **120** to be twisted about their flexure joints **JC.** The sharp edges **124A** can also assist in making firm and precise engagement with an object.

In some embodiments, the distal phalanx **120** is prismatic and has a substantially rectangular cross-section. In some embodiments, the proximal phalanx **110** is also prismatic and has a substantially rectangular cross-section.

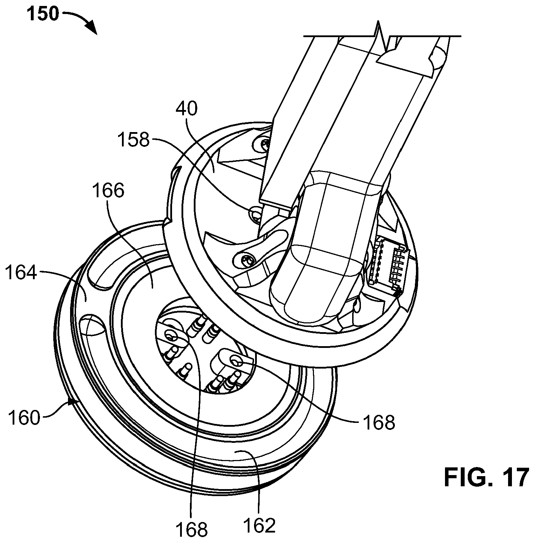

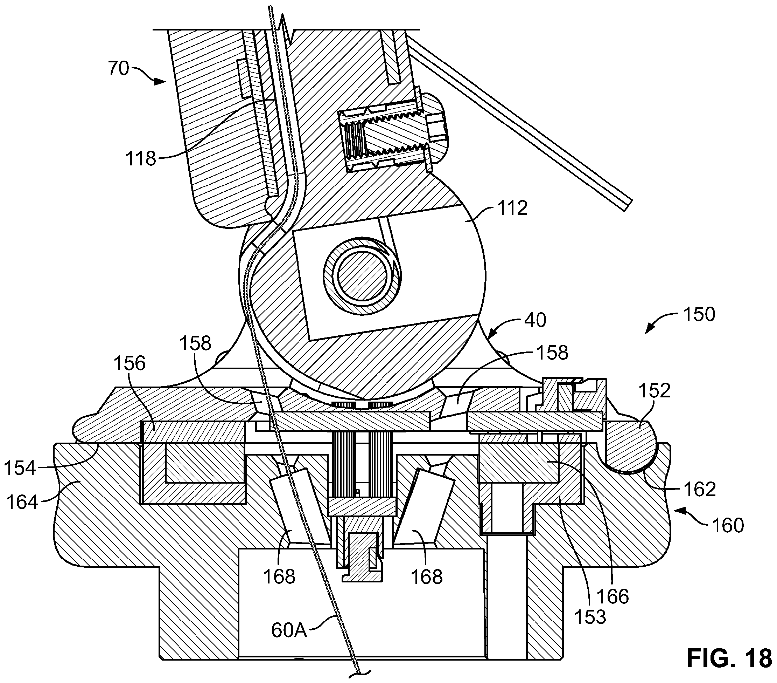

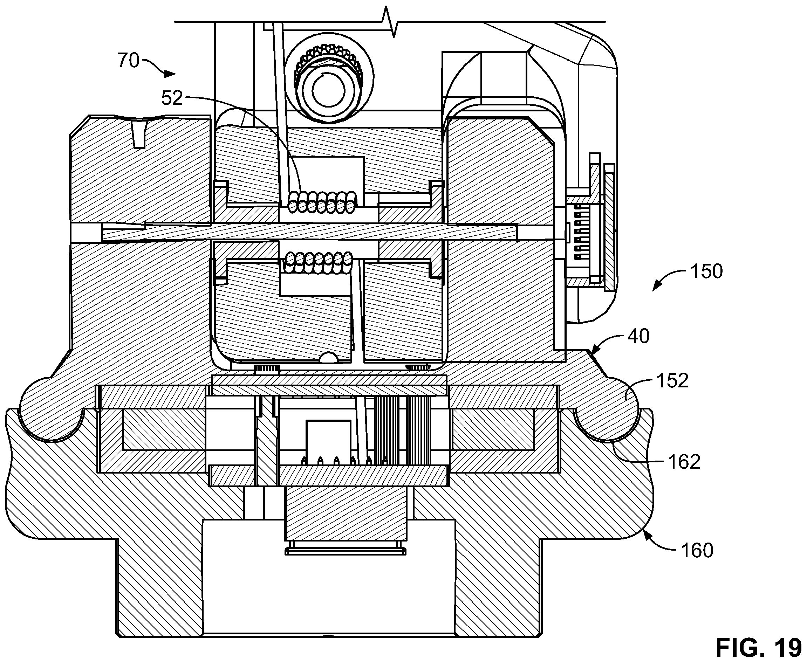

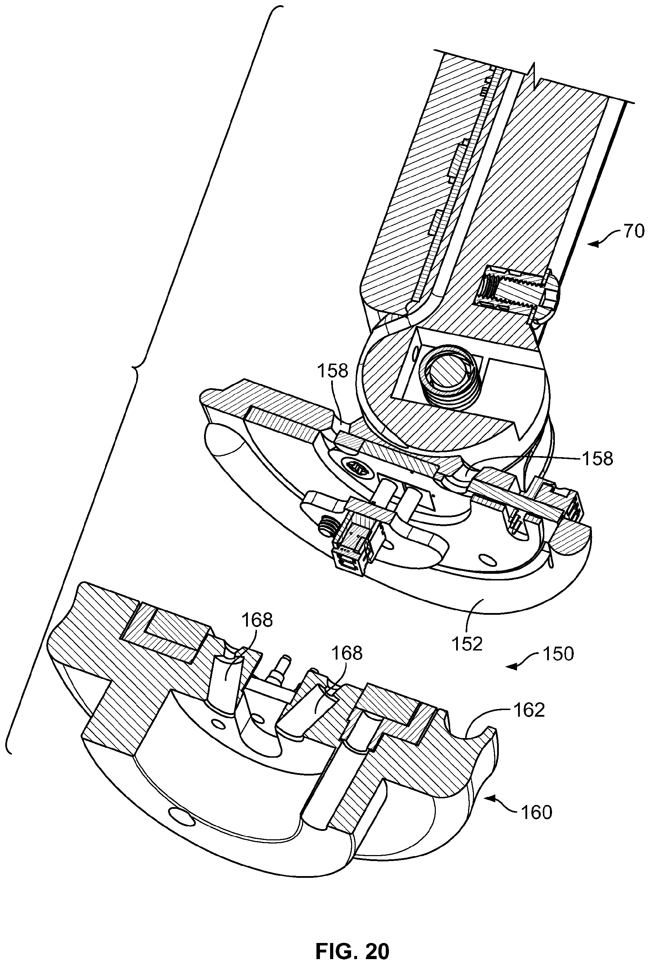

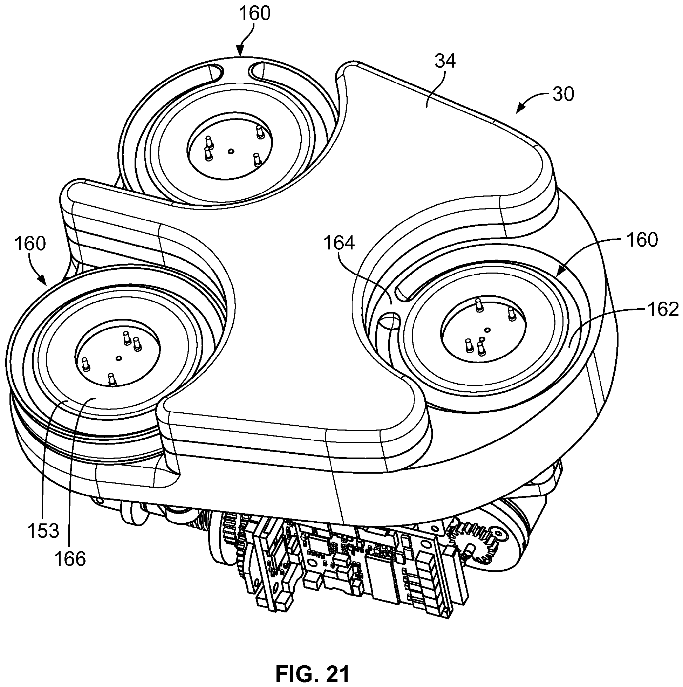

With reference to **Figures 15-22****,** the grasper **20** may also be provided with a magnetic breakaway system or mechanism **150** coupling each of the fingers **70, 80, 90** to the base **30.** The breakaway features for each of the fingers **70, 80, 90** may be substantially the same or similar and therefore the description below with regard to the finger **70** likewise applies to the fingers **80** and **90.**

The magnetic breakaway system **150** includes the finger base submount **40** and the magnet base submount **160.** A magnet **166** is fixed in the submount **160** and a ferromagnetic member or plate **156** (*e.g.,* formed of steel) is affixed in the submount **40.** A magnetic field concentrator **153** may be provided in the submount **160.**

The submount **40** has a circumferentially extending locator flange **152** defining a rotational alignment slot **154** therein. The submount **160** has a circumferentially extending, semi-annular locator groove **162** having a rotational alignment tab **164** therein. The locator flange **152** is seated in the locator groove **162** such that the tab **164** is seated in the slot **154.** The tendon cable **60A** extends through axial tendon raceways **158** and **168** defined in the submounts **40** and **160,** respectively. Likewise, in the case of the finger **80,** the tendon cable **62A** extends through the raceways **158** and **168.** In the case of the thumb **90,** the tendon cables **64A** and **66A** extend through respective ones of the axially extending raceways **158** and **168.**

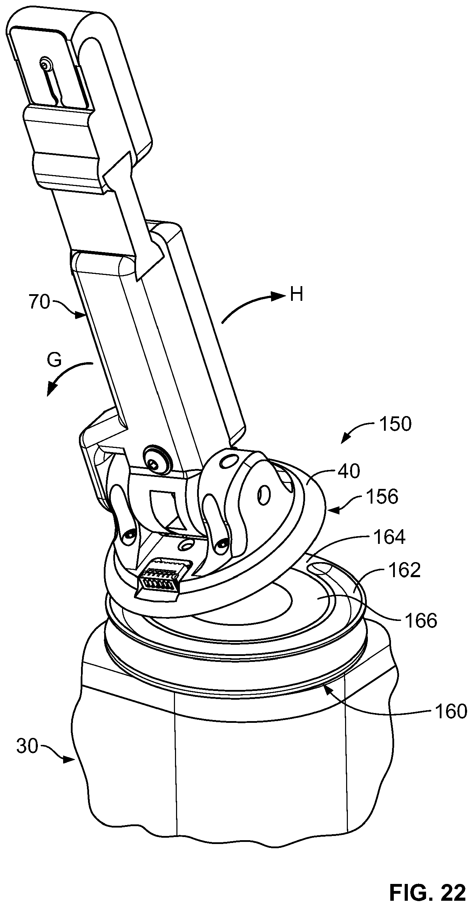

In use, the magnetic breakaway system **150** can serve to decouple the fingers **70, 80, 90** from the base **30** to prevent or reduce the risk of damage to the finger or joint. When a load on a finger exceeds a prescribed threshold load, the magnetic attraction between the components **156** and **166** is overcome and the submount **40** separates (partially or fully) from the submount **160.** For example, the finger **70** and its submount **40** may be deflected away from the cooperating submount **160** in a deflection direction **G** as shown in **Figure 22****.** When the load on the finger is relieved (*e.g.,* by removing an object or operating the associated actuator to pay out the tendon cable), the magnetic attraction or tension in the tendon cable will again draw the submounts **40** and **160** together. For example, the finger **70** and its submount **40** may return or pivot back onto the cooperating submount **160** in a return direction **H** as shown in **Figure 22****.** The pull force of the tendon through the raceways **158, 168** will tend to draw the submounts **40**,**160** into coaxial alignment. In the case of a small breakaway deflection of the submount **40** from the submount **160,** the shapes of the locator features **152, 154, 162, 164** may automatically guide the submounts **40** and **160** back into rotational alignment, whereupon the submounts **40** and **160** will again interlock. Applying additional tension to the tendon cable may also rotate the submounts **40** and **160** into rotational alignment. In some cases, the submounts **40** and **160** can be rotationally aligned by rotating the submount **160** using the actuator **68.** The submount **160** will slidably rotate relative to the corresponding submount **40** until their locator features align, whereupon the submounts **40** and **160** will nest and interlock. In some cases, it may be necessary to manually realign and reseat the submounts **40** and **160.**

In some embodiments, the magnetic breakaway system **150** does not compromise the capability of the grasper **20** to lift heavy objects. Because the tendon cable or cables run axially through both of the submounts **40**, **160** and substantially perpendicular to the face of the magnet **166,** the tendon cables pull the submounts **40**, **160** together. Typically, the submounts **40** and **160** will only be dislodged by twisting force on the fingers.

As mentioned above and as shown in **Figure 5****,** the thumb **90** is provided with two independent tendon cables **64A** and **66A** connected to corresponding actuators **64** and **66.** The tendon cable **64A** may be regarded as an agonist tendon and the tendon cable **66A** may be regarded as an antagonist tendon.

The tendon cable **64A** is routed to and anchored to the distal phalanx **120** of the thumb **90** in the same manner as described above. The tendon cable **66A** is routed through the outer raceways **158, 168,** over the hinge feature **42,** and anchored to the back side of the proximal phalanx **110** by a screw **43.**

In addition to being operable in the same manner as described above for the fingers **70, 80** using the tendon cable **64A,** the tendon cables **64A** and **66A** can be used together to control movement of the distal phalanx **120** of the thumb **90** independently of its proximal phalanx **110.** More particularly, the tendon cable **66A** can be used to hold the proximal phalanx **110** in place, effectively stalling the proximal phalanx **110** against further rotation in the closing direction **F,** while the actuator **64** draws on the tendon cable **64A.** Because the proximal phalanx **110** is held in place, the distal phalanx **120** is independently bent at the flexure joint **JC** in the direction **M** without simultaneous pivoting of the proximal phalanx **110** in the closing direction **F.** The tendon cable **66A** can be extended to permit the distal phalanx **120** to elastically bend back in the direction **N** about the flexure joint **JC.**

According to some embodiments, the tendon cables **60A, 62A, 64A, 66A** are capable of transmitting sustained tensile loads in the range of from about 60 to 120 1bf, exhibit low energy storage upon bending, and are robust to bend radii less than one millimeter.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of the claims. Therefore, it is to be understood that the foregoing is illustrative of the present invention and is not to be construed as limited to the specific embodiments disclosed, and that modifications to the disclosed embodiments, as well as other embodiments, are intended to be included within the scope of the claims.

## Claims

1. A compliant underactuated grasper (20) comprising:
a base (30);
a plurality of fingers (70, 80, 90), at least one of the plurality of fingers comprising:
a proximal phalanx (110);
a proximal joint (JP) connecting the proximal phalanx (110) to the base (30);
a distal phalanx (120);
a distal joint (JC) connecting the distal phalanx (120) to the proximal phalanx (110); and
a member for moving the phalanges;
wherein at least one of the proximal joint (JP) and the distal joint (JC) includes a flexure joint, the flexure joint having a first compliance in a first direction of the flexure joint and a second compliance in a second direction of the flexure joint, wherein the second compliance is stiffer than the first compliance;
wherein the distal phalanx (120) includes:
a rounded end face (124A); and
a lifting portion (140) including a lifting edge (142A) adjacent the rounded end face (124A);
wherein the member acts in parallel to the first direction of the flexure joint;
at least one actuator (60, 62, 64) associated with the member;
wherein the grasper (20) has fewer actuators than degrees of freedom; and
wherein the grasper (20) includes an adjustment mechanism (144A, 144B) operable to selectively adjust the position of the lifting edge (142A) relative to the rounded end face (124A).

2. The grasper of Claim 1 wherein:
the lifting edge (142A) is a free terminal edge; and
the distal phalanx (120) includes a lifting groove (146) defined between the rounded end face (124A) and the lifting edge (142A).

3. The grasper of Claim 2 wherein the rounded end face (124A) defines an arc in a plane substantially perpendicular to a longitudinal axis of the lifting groove.

4. The grasper of Claim 2 wherein the lifting groove (146) has a depth in the range of from about 1 mm to 3 mm.

5. The grasper of Claim 1 wherein the rounded end face (124A) is formed of a softer material than the lifting portion (140).

6. The grasper of Claim 5 wherein:
the softer material of the rounded end face (124A) has a hardness in the range of from about 0 Shore A to 60 Shore A; and
the lifting portion (140) has a hardness of at least about 100 GPa.

7. The grasper of Claim 1 wherein the distal phalanx (120) has a substantially planar inner grasping face (124B) and distinct, opposed, axially extending inner side edges (126A).

8. The grasper of claim 1 wherein:
the base (30) is a palm base;
the plurality of fingers includes first and second fingers (70, 80), wherein each of the first and second fingers comprises:
a proximal phalanx (110);
a distal phalanx (120);
a compliant flexure joint (JC) connecting the distal phalanx (120) to the proximal phalanx (110); and
first and second rotation joints (JR) connecting the first and second fingers (70, 80), respectively, to the palm base to enable rotation of the first and second fingers (70, 80) relative to the palm base, wherein the first and second fingers can be rotated relative to the palm base about first and second rotation joints (JR) to reorient the first and second fingers with respect to the palm base and to change an angle defined between a pivot axis of the first finger and a pivot axis of the second finger; and
the at least one actuator (60, 62, 64) is operable to move the first and second fingers (70, 80).

9. The grasper of Claim 8 wherein:
each of the first and second fingers (70, 80) includes a respective pin joint connecting the proximal phalanx (110) thereof to the palm base (34);
the pin joint (JP) of the first finger (70) constrains angular movement of the proximal phalanx (110) of the first finger relative to the palm base to rotation about the pivot axis (FP-FP) of the first finger; and
the pin joint (JP) of the second finger (80) constrains angular movement of the proximal phalanx (110) of the second finger relative to the palm base to rotation about the pivot axis (FP-FP) of the second finger.

10. The grasper of Claim 8 wherein:
each of the first and second fingers (70, 80) includes a respective pin joint (JP) connecting the proximal phalanx (110) thereof to the palm base (34), the pin joint (JP) having a dominant degree of freedom about the pivot axis (FP-FP) of the associated one of the first and second fingers (70, 80); and
each of the first and second fingers (70, 80) includes a tendon cable (60A, 62A) for moving the proximal and distal phalanges such that movement of the tendon cable (60A, 62A) generates angular motion of the proximal phalanx about the pin pivot axis (FP-FP) at a greater rate than angular motion of the distal phalanx (120) about the flexure joint (JC).

11. The grasper of Claim 8 wherein each of the first and second fingers (70, 80) includes:
a pivot joint (JP) connecting the proximal phalanx (110) thereof to the palm base (34) for rotation about the pivot joint (JP) in a first direction and a second direction about the pivot axis (FP-FP) thereof;
a tendon cable (60A, 62A) for moving the proximal phalanx (110) thereof in the first direction; and
a return biasing spring (52) to drive the proximal phalanx thereof in the second direction to a return position, wherein the return biasing spring (52) has a spring rate sufficient to retain the proximal phalanx in the return position in any orientation of the grasper with the tendon cable slack.

12. The grasper of claim 1 wherein:
the base is a palm base (34);
the plurality of fingers includes first and second fingers (70, 80), wherein each of the first and second fingers comprises:
a proximal phalanx (110);
a distal phalanx (120);
a compliant flexure joint (JC) connecting the distal phalanx (120) to the proximal phalanx (110);
a pin joint (JP) connecting the proximal phalanx (110) to the palm base (34) for rotation about a pin pivot axis (FP-FP);
the grasper includes first and second rotation joints (JR) connecting the first and second fingers (70, 80), respectively, to the palm base to enable rotation of the first and second fingers relative to the palm base, wherein the first and second fingers can be rotated relative to the palm base about the first and second rotation joints to reorient their pin pivot axes with respect to the palm base;
the grasper includes at least one finger actuator (60, 62) to move the first and second fingers; and
the grasper includes at least one finger rotation actuator (68) operable to forcibly rotate the first and second fingers about the first and second rotation joints (JR).

13. The grasper of Claim 1 wherein at least one of the plurality of fingers includes:
a tendon cable (60A, 62A) configured to move the finger relative to the base (30); and
a magnetic breakaway mechanism (150) releasably coupling the finger to the base;
wherein:
the tendon cable extends through the magnetic breakaway mechanism (150) and to the finger;
the magnetic breakaway mechanism (150) includes:
a finger submount (40), wherein the finger is pivotably connected to the finger submount (40) by the proximal joint (110); and
a base submount (160) on the base (30);
wherein the finger submount (40) and the base submount (160) are magnetically attracted to one another and the finger submount is connected to the base via the base submount;
the magnetic breakaway mechanism includes at least one locator feature to re-align the finger submount with the base submount when the finger submount and the base submount are separated and re-joined; and
the at least one locator feature includes an annular or semi-annular groove (154).

14. The grasper of Claim 13 wherein:
the plurality of fingers includes two finger digits (70, 80) and a thumb (90) digit opposing the two finger digits (70, 80);
the finger digits (70, 80) and the thumb digit (90) each comprise:
a proximal phalanx (110);
a distal phalanx (120);
a distal joint (JC) directly connecting the proximal phalanx to the distal phalanx, the distal joint being compliant in a first direction;
a proximal joint (JP) directly connecting the proximal phalanx to the base, the proximal joint being compliant in a second direction; and
a tendon cable (60A, 62A, 64A) for moving the proximal and distal phalanges, wherein the tendon cable is substantially parallel to the first direction of compliance and substantially changes the compliance of the distal joint in the first direction;
the at least one actuator (60, 62, 64) is operable to move the finger digits and thumb digit;
the thumb digit further includes a second tendon cable (66A) for selectively restraining the proximal phalanx (110) thereof in opposition to the first tendon (64A) cable to enable movement of the distal phalanx (120) independently of the proximal phalanx (110); and
the magnetic breakaway mechanism (150) releasably couples an associated one of the finger digits (70, 80) and the thumb digit (90) to the base (30).

## Patentansprüche

1. Nachgiebige unterbetätigte Zange (20), umfassend:
eine Basis (30);
eine Mehrzahl von Fingern (70, 80, 90), wobei mindestens einer der Mehrzahl von Fingern Folgendes umfasst:
ein proximales Fingerglied (110);
ein proximales Gelenk (JP), welches das proximale Fingerglied (110) mit der Basis (30) verbindet;
ein distales Fingerglied (120);
ein distales Gelenk (JC), welches das distale Fingerglied (120) mit dem proximalen Fingerglied (110) verbindet; und
ein Element zum Bewegen der Fingerglieder;
wobei mindestens eines von dem proximalen Gelenk (JP) und dem distalen Gelenk (JC) eine biegsame Verbindung beinhaltet, wobei die biegsame Verbindung eine erste Nachgiebigkeit in eine erste Richtung des biegsamen Gelenks und eine zweite Nachgiebigkeit in eine zweite Richtung des biegsamen Gelenks aufweist, wobei die zweite Nachgiebigkeit steifer als die erste Nachgiebigkeit ist;
wobei das distale Fingerglied (120) Folgendes beinhaltet:
eine abgerundete Endseite (124A); und
einen Hebeabschnitt (140), der eine Hebekante (142A) beinhaltet, die an die abgerundete Endfläche (124A) angrenzt;
wobei das Element parallel zur ersten Richtung des biegsamen Gelenks wirkt; wobei mindestens ein Betätigungselement (60, 62, 64) dem Element zugeordnet ist; wobei die Zange (20) weniger Betätigungselemente aufweist als Freiheitsgrade; und wobei die Zange (20) einen Einstellmechanismus (144A, 144B) aufweist, der betriebsfähig ist, die Position der Hebekante (142A) selektiv relativ zur abgerundeten Endfläche (124A) einzustellen.

2. Zange nach Anspruch 1, wobei:
die Hebekante (142A) eine freie Abschlusskante ist; und
das distale Fingerglied (120) eine Hebenut (146) beinhaltet, die zwischen der abgerundeten Endfläche (124A) und der Hebekante (142A) definiert ist.

3. Zange nach Anspruch 2, wobei die abgerundete Endfläche (124A) einen Bogen in einer Ebene definiert, der im Wesentlichen rechtwinklig zu einer Längsachse der Hebenut ist.

4. Zange nach Anspruch 2, wobei die Hebenut (146) eine Tiefe im Bereich von ungefähr 1 mm bis 3 mm aufweist.

5. Zange nach Anspruch 1, wobei die abgerundete Endfläche (124A) aus einem weicheren Material als der Hebeabschnitt (140) gebildet ist.

6. Zange nach Anspruch 5, wobei:
das weichere Material der abgerundeten Endfläche (124A) eine Härte im Bereich von ungefähr 0 Shore-A bis 60 Shore-A aufweist; und
der Hebeabschnitt (140) eine Härte von mindestens ungefähr 100 GPa aufweist.

7. Zange nach Anspruch 1, wobei das distale Fingerglied (120) eine im Wesentlichen ebene innere Greiffläche (124B) und getrennte, gegenüberliegende, sich axial erstreckende innere Seitenkanten (126A) aufweist.

8. Zange nach Anspruch 1, wobei:
die Basis (30) eine Handflächenbasis ist;
wobei die Mehrzahl von Fingern einen ersten und zweiten Finger (70, 80) beinhaltet, wobei jeder der ersten und zweiten Finger Folgendes umfasst:
ein proximales Fingerglied (110);
ein distales Fingerglied (120);
ein nachgiebiges biegsames Gelenk (JC), welches das distale Fingerglied (120) mit dem proximalen Fingerglied (110) verbindet; und
ein erstes und zweites Drehgelenk (JR), welche die ersten und zweiten Finger (70, 80) mit der Handflächenbasis verbindet, um Drehung des ersten und zweiten Fingers (70, 80) relativ zur Handflächenbasis zu ermöglichen, wobei der erste und zweite Finger relativ zur Handflächenbasis um ein erstes und zweites Drehgelenk (JR) gedreht werden können, um die ersten und zweiten Finger in Bezug auf die Handflächenbasis neu zu orientieren und einen Winkel zu ändern, der zwischen einer Schwenkachse des ersten Fingers und einer Schwenkachse des zweiten Fingers definiert ist; und
das mindestens eine Betätigungselement (60, 62, 64) betriebsfähig ist, die ersten und zweiten Finger (70, 80) zu bewegen.

9. Zange nach Anspruch 8, wobei:
jeder der ersten und zweiten Finger (70, 80) ein entsprechendes Bolzengelenk beinhaltet, welches das proximale Fingerglied (110) davon mit der Handflächenbasis (34) verbindet;
das Bolzengelenk (JP) des ersten Fingers (70) Winkelbewegung des proximalen Fingergliedes (110) des ersten Fingers relativ zur Handflächenbasis hinsichtlich Drehung um die Schwenkachse (FP-FP) des ersten Fingers einschränkt; und
das Bolzengelenk (JP) des zweiten Fingers (80) Winkelbewegung des proximalen Fingergliedes (110) des zweiten Fingers relativ zur Handflächenbasis hinsichtlich Drehung um die Schwenkachse (FP-FP) des zweiten Fingers einschränkt.

10. Zange nach Anspruch 8, wobei:
jeder der ersten und zweiten Finger (70, 80) ein entsprechendes Bolzengelenk (JP) beinhaltet, welches das proximale Fingerglied (110) davon mit der Handflächenbasis (34) verbindet, wobei das Bolzengelenk (JP) einen dominanten Freiheitsgrad um die Schwenkachse (FP-FP) des zugeordneten ersten und zweiten Fingers (70, 80) aufweist; und
jeder der ersten und zweiten Finger (70, 80) ein Spannkabel (60A, 62A) zum Bewegen des proximalen und distalen Fingerglieds aufweist, so dass Bewegung des Spannkabels (60A, 62A) eine Winkelbewegung des proximalen Fingerglieds um die Bolzenschwenkachse (FP-FP) schneller erzeugt, als dass Winkelbewegung des distalen Fingerglieds (120) um das biegsame Gelenk (JC) erzeugt wird.

11. Zange nach Anspruch 8, wobei jeder der ersten und zweiten Finger (70, 80) Folgendes beinhaltet:
ein Bolzengelenk (JP), welches das proximale Fingerglied (110) davon mit der Handflächenbasis (34) zur Drehung um das Schwenkgelenk (JP) in eine erste Richtung und eine zweite Richtung um die Schwenkachse (FP-FP) davon verbindet;
ein Spannkabel (60A, 62A) zum Bewegen des proximalen Fingerglieds (110) davon in eine erste Richtung; und
eine vorgespannte Rückstellfeder (52), um das proximale Fingerglied davon in die zweite Richtung in eine Rückstellposition zu bringen, wobei die vorgespannte Rückstellfeder (52) eine Federkonstante aufweist, die ausreicht, um das proximale Fingerglied in der Rückstellposition in jeder Ausrichtung der Zange mit dem durchhängenden Spannkabel zu halten.

12. Zange nach Anspruch 1, wobei:
die Basis eine Handflächenbasis (34) ist;
wobei die Mehrzahl von Fingern einen ersten und zweiten Finger (70, 80) beinhaltet, wobei jeder der ersten und zweiten Finger Folgendes umfasst:
ein proximales Fingerglied (110);
ein distales Fingerglied (120);
ein nachgiebiges biegsames Gelenk (JC), welches das distale Fingerglied (120) mit dem proximalen Fingerglied (110) verbindet;
ein Bolzengelenk (JP) welches das proximale Fingerglied (110) mit der Handflächenbasis (34) zur Drehung um eine Bolzenschwenkachse (FP-FP) verbindet;
wobei die Zange ein erstes und zweites Drehgelenk (JR) beinhaltet, welche die ersten und zweiten Finger (70, 80) mit der Handflächenbasis verbindet, um Drehung des ersten und zweiten Fingers relativ zur Handflächenbasis zu ermöglichen, wobei die ersten und zweiten Finger relativ zur Handflächenbasis um das erste und zweite Drehgelenk gedreht werden können, um ihre Bolzenschwenkachsen in Bezug auf die Handflächenbasis neu zu orientieren;
die Zange mindestens ein Betätigungselement (60, 62) beinhaltet, um die ersten und zweiten Finger zu bewegen; und
die Zange mindestens ein Fingerdrehbetätigungselement (68) beinhaltet, das betriebsfähig ist, die ersten und zweiten Finger zwangsweise um das erste und zweite Drehgelenk (JR) zu drehen.

13. Zange nach Anspruch 1, wobei mindestens einer der Mehrzahl von Fingern Folgendes beinhaltet:
ein Spannkabel (60A, 62A), das ausgelegt ist, die Finger relativ zur Basis (30) zu bewegen; und
einen magnetischen Trennmechanismus (150), der die Finger lösbar an die Basis koppelt; wobei:
sich das Spannkabel durch den magnetischen Trennmechanismus (150) und zum Finger erstreckt;
der magnetische Trennmechanismus (150) Folgendes beinhaltet:
einen Fingersockel (40), wobei der Finger schwenkbar mit dem Fingersockel (40) durch das proximale Gelenk (110) verbunden ist;
und einen Basissockel (160) auf der Basis (30);
wobei sich der Fingersockel (40) und der Basissockel (160) magnetisch anziehen und der Fingersockel mit der Basis über den Basissockel verbunden ist;
der magnetische Trennmechanismus mindestens eine Ortungsfunktion beinhaltet, um den Fingersockel mit dem Basissockel wieder auszurichten, wenn der Fingersockel und der Basissockel getrennt und wieder verbunden werden; und
die mindestens eine Ortungsfunktion beinhaltet eine ringförmige oder halbringförmige Nut (154).

14. Zange nach Anspruch 13, wobei:
die Mehrzahl von Fingern zwei Fingerglieder (70, 80) und ein Daumenglied (90) beinhaltet, der den Fingergliedern (70, 80) gegenüberliegt;
die Fingerglieder (70, 80) und das Daumenglied (90) jeweils Folgendes umfassen:
ein proximales Fingerglied (110);
ein distales Fingerglied (120);
ein distales Gelenk (JC), welches das proximale Fingerglied mit dem distalen Fingerglied verbindet, wobei das distale Gelenk in eine erste Richtung nachgiebig ist;
ein proximales Gelenk (JP), welches das proximale Fingerglied mit der Basis verbindet, wobei das proximale Gelenk in eine zweite Richtung nachgiebig ist; und
ein Spannkabel (60A, 62A, 64A) zum Bewegen der proximalen und distalen Fingerglieder, wobei das Spannkabel im Wesentlichen parallel zur ersten Nachgiebigkeitsrichtung ist und im Wesentlichen die Nachgiebigkeit des distalen Gelenks in die erste Richtung ändert;
das mindestens eine Betätigungselement (60, 62, 64) betriebsfähig ist, die Fingerglieder und das Daumenglied zu bewegen;
wobei das Daumenglied ferner ein zweites Spannkabel (66A) zum selektiven Zurückhalten des proximalen Fingerglieds (110) davon in eine entgegengesetzte Richtung zum ersten Spannkabel (64A) beinhaltet, um Bewegung des distalen Fingerglieds (120) unabhängig vom proximalen Fingerglied (110) zu ermöglichen; und
der magnetische Trennmechanismus (150) lösbar ein den Fingergliedern (70, 80) und dem Daumenglied (90) zugeordnetes Glied mit der Basis (30) verbindet.

## Revendications

1. Dispositif de préhension sous-actionné souple (20), comprenant :
une base (30) ;
une pluralité de doigts (70, 80, 90), au moins un de la pluralité de doigts comprenant :
une phalange proximale (110) ;
une articulation proximale (JP) raccordant la phalange proximale (110) à la base (30) ;
une phalange distale (120) ;
une articulation distale (JC) raccordant la phalange distale (120) à la phalange proximale (110) ; et
un membre pour déplacer les phalanges ;
au moins une des articulations que sont l'articulation proximale (JP) et l'articulation distale (JC) comprenant une articulation de flexion, l'articulation de flexion présentant une première souplesse dans une première direction de l'articulation de flexion, et une deuxième souplesse dans une deuxième direction de l'articulation de flexion, la deuxième souplesse étant plus raide que la première souplesse ;
la phalange distale (120) comprenant :
une face d'extrémité arrondie (124A) ; et
une partie de levage (140) comprenant un bord de levage (142A) adjacent à une face d'extrémité arrondie (124A) ;
le membre agissant parallèlement à la première direction de l'articulation de flexion ;
au moins un actionneur (60, 62, 64) étant associé au membre ;
le dispositif de préhension (20) comprenant moins d'actionneurs que de degrés de liberté ; et
le dispositif de préhension (20) comprenant un mécanisme de réglage (144A, 144B) actionnable pour ajuster sélectivement la position du bord de levage (142A) relativement à la face d'extrémité arrondie (124A).

2. Dispositif de préhension selon la revendication 1, dans lequel :
le bord de levage (142A) est un bord à terminal libre ; et
la phalange distale (120) comprend une cannelure de levage (146) définie entre la face d'extrémité arrondie (124A) et le bord de levage (142A).

3. Dispositif de préhension selon la revendication 2, la face d'extrémité arrondie (124A) définissant un arc dans un plan substantiellement perpendiculaire à un axe longitudinal de la cannelure de levage.

4. Dispositif de préhension selon la revendication 2, la profondeur de la cannelure de levage (146) étant comprise entre 1 mm et 3 mm.

5. Dispositif de préhension selon la revendication 1, la face d'extrémité arrondie (124A) étant réalisée avec un matériau plus mou que la partie de levage (140).

6. Dispositif de préhension selon la revendication 5, dans lequel :
le matériau plus mou de la face d'extrémité arrondie (124A) présente une dureté comprise dans la plage allant de 0 Shore A à 60 Shore A; et
la partie de levage (140) présente une dureté égale à au moins 100 GPa.

7. Dispositif de préhension selon la revendication 1, la phalange distale (120) comprenant une face de préhension interne (124B) substantiellement planaire, et des bords latéraux internes (126A) distincts, opposés, et s'étendant axialement.

8. Dispositif de préhension selon la revendication 1,
la base (30) étant une base palmaire ;
la pluralité de doigts comprenant des premier et deuxièmes doigts (70, 80), chacun des premier et deuxième doigts comprenant :
une phalange proximale (110) ;
une phalange distale (120) ;
une articulation de flexion souple (JC) raccordant la phalange distale (120) à la phalange proximale (110) ; et
des première et deuxième articulations de rotation (JR) raccordant les premier et deuxième doigts (70, 80), respectivement, à la base palmaire afin de permettre la rotation des premier et deuxièmes doigts (70, 80) relativement à la base palmaire, les premier et deuxièmes doigts pouvant tourner relativement à la base palmaire autour des première et deuxième articulations de rotation (JR) afin de réorienter les premier et deuxième doigts relativement à la base palmaire et de modifier un angle défini entre un axe de pivotement du premier doigt et un axe de pivotement du deuxième doigt ; et
l'au moins un actionneur (60, 62, 64) pouvant être utilisé pour déplacer les premier et deuxième doigts (70, 80).

9. Dispositif de préhension selon la revendication 8,
chacun des premier et deuxième doigts (70, 80) comprenant une articulation à tourillon respective raccordant sa phalange proximale (110) à la base palmaire (34) ;
l'articulation à tourillon (JP) du premier doigt (70) limitant le mouvement angulaire de la phalange proximale (110) du premier doigt relativement à la base palmaire pour la rotation autour de l'axe de pivotement (FP-FP) du premier doigt ; et
l'articulation à tourillon (JP) du deuxième doigt (80) limitant le mouvement angulaire de la phalange proximale (110) du deuxième doigt relativement à la base palmaire pour la rotation autour de l'axe de pivotement (FP-FP) du deuxième doigt.

10. Dispositif de préhension selon la revendication 8,
chacun des premier et deuxième doigts (70, 80) comprenant une articulation à tourillon respective (JP) raccordant sa phalange proximale (110) à la base palmaire (34), l'articulation à tourillon (JP) présentant un degré de liberté dominant autour de l'axe de pivotement (FP-FP) du doigt correspondant entre les premier et deuxième doigts (70, 80) ; et
chacun des premier et deuxième doigts (70, 80) comprenant un câble de tendon (60A, 62A) pour déplacer les phalanges proximale et distale de sorte que le mouvement du câble de tendon (60A, 62A) produise un mouvement angulaire de la phalange proximale autour de l'axe de pivotement à tourillon (FP-FP) à une vitesse supérieure au mouvement angulaire de la phalange distale (120) autour de l'articulation de flexion (JC).

11. Dispositif de préhension selon la revendication 8, chacun des premier et deuxième doigts (70, 80) comprenant :
une articulation à tourillon (JP) raccordant sa phalange proximale (110) à la base palmaire (34) pour une rotation autour de l'articulation à tourillon (JP) dans une première direction et une deuxième direction autour de son axe de pivotement (FP-FP) ;
un câble de tendon (60A, 62A) pour déplacer sa phalange proximale (110) dans la première direction ; et
un ressort de sollicitation du rappel (52) pour entraîner sa phalange proximale dans la deuxième direction, vers une position de départ, le coefficient d'élasticité du ressort de sollicitation du rappel (52) étant suffisant pour maintenir la phalange proximale dans la position de rappel dans toute orientation du dispositif de préhension, le câble de tendon étant mou.

12. Dispositif de préhension selon la revendication 1, dans lequel :
la base est une base palmaire (34) ;
la pluralité de doigts comprend les premier et deuxième doigts (70, 80), chacun des premier et deuxième doigts comprenant :
une phalange proximale (110) ;
une phalange distale (120) ;
une articulation de flexion souple (JC) raccordant la phalange distale (120) à la phalange proximale (110) ; et
une articulation à tourillon (JP) raccordant la phalange proximale (110) à la base palmaire (34) pour la rotation autour d'un axe de pivotement à tourillon (FP-FP) ;
le dispositif de préhension comprenant des premier et deuxième joints de rotation (JR) raccordant les premier et deuxième doigts (70, 80), respectivement, à la base palmaire afin de permettre la rotation des premier et deuxièmes doigts relativement à la base palmaire, les premier et deuxièmes doigts pouvant tourner relativement à la base palmaire autour des première et deuxième articulations de rotation afin de réorienter leurs axes de pivotement relativement à la base palmaire ;
le dispositif de préhension comprenant au moins un actionneur de doigt (60, 62) pour déplacer les premier et deuxième doigts ; et
le dispositif de préhension comprenant au moins un actionneur de rotation de doigt (68) utilisable pour oeuvrer la rotation forcée des premier et deuxième doigts autour des premier et deuxième axes de rotation (JR).

13. Dispositif de préhension selon la revendication 1, au moins un de la pluralité de doigts comprenant :
un câble de tendon (60A, 62A) configuré pour déplacer le doigt relativement à la base (30), et
un mécanisme magnétique de démarrage (150) raccordant de façon détachable le doigt à la base ; dans lequel :
le câble de tendon traversant le mécanisme magnétique de démarrage (150) en se prolongeant jusqu'au doigt ;
le mécanisme magnétique de démarrage (150) comprenant :
une embase de doigt (40), le doigt étant connecté de façon pivotante à l'embase de doigt (40) par le joint proximal (110) ; et
une embase de base (160) sur la base (30) ;
l'embase de doigt (40) et l'embase de base (160) étant attirées magnétiquement l'une à l'autre, l'embase de doigt étant raccordée à la base par le biais de l'embase de base ;
le mécanisme magnétique de démarrage comprenant au moins un dispositif de positionnement pour réaligner l'embase de doigt et l'embase de base lorsque l'embase de doigt et l'embase de base sont séparées, puis jointes à nouveau ; et
l'au moins un dispositif de positionnement comprenant une cannelure annulaire ou semi-annulaire (154).

14. Dispositif de préhension selon la revendication 13,
la pluralité de doigts comprenant deux doigts (70, 80) et un pouce (90) opposé aux deux doigts (70, 80) ;
les doigts (70, 80) et le pouce (90) comprenant chacun :
une phalange proximale (110) ;
une phalange distale (120) ;
une articulation distale (JC) raccordant directement la phalange proximale à la phalange distale, l'articulation distale étant souple dans une première direction ;
une articulation proximale (JP) raccordant directement la phalange proximale à la base, l'articulation proximale étant souple dans une deuxième direction ; et
un câble de tendon (60A, 62A, 64A) pour déplacer les phalanges proximale et distale de sorte que le câble de tendon soit substantiellement parallèle à la première direction souple et modifie substantiellement la souplesse de l'articulation distale dans la première direction ;
l'au moins un actionneur (60, 62, 64) pouvant être utilisé pour déplacer les doigts et le pouce ;
le pouce comprenant en outre un deuxième câble de tendon (66A) pour retenir de façon sélective sa phalange proximale (110) de façon opposée au premier câble de tendon (64A) afin de permettre le mouvement de la phalange distale (120) indépendamment de la phalange proximale (110) ; et
le mécanisme magnétique de démarrage (150) couplant de façon amovible un doigt connexe, parmi les doigts (70, 80) et le pouce (90), à la base (30).
